# EUROPEAN PATENT APPLICATION

(11) **EP 1 381 233 A1**
(43) Date of publication of application: **14.01.2004**
(21) Application number: 02718551.1
(22) Date of filing: 12.04.2002
(51) Int. Cl.: H04N 5/91

(54) **MULTI-VIEW STORAGE BROADCAST SERVICE METHOD, APPARATUS, AND SYSTEM**

(30) Priority: 16.04.2001 JP 2001116561
(71) Applicant: Matsushita Electronics Corporation, Kadoma-shi, Osaka 571-8501 (JP)
(72) Inventor: KAGEYAMA, Mitsuhiro, Tachikawa-shi, Tokyo 190-0032 (JP)
(74) Representative: Grünecker, Kinkeldey, Stockmair & Schwanhäusser Anwaltssozietät
(86) International application number: PCT/JP2002/003647
(87) International publication number: WO 2002/087233

(57) **Abstract**

It is possible for a program producer to produce a program without the binding of on-air time restriction, while airing a program in accordance with its on air time scheduledby a program organizing apparatus, by concurrently airing another video / audio which exceeds the on air time. Furthermore, viewers are able to enjoy two types of versions for one program, that is, an ordinary version fitting with its on air time frame and a longer version with extra video / audio exceeding its on air time frame.

## Description

### FIELD OF THE INVENTION

The present invention relates to a multi-view storage broadcasting service system, as well as an apparatus, a method, a storage medium, and a program related thereto.

### BACKGROUND ART

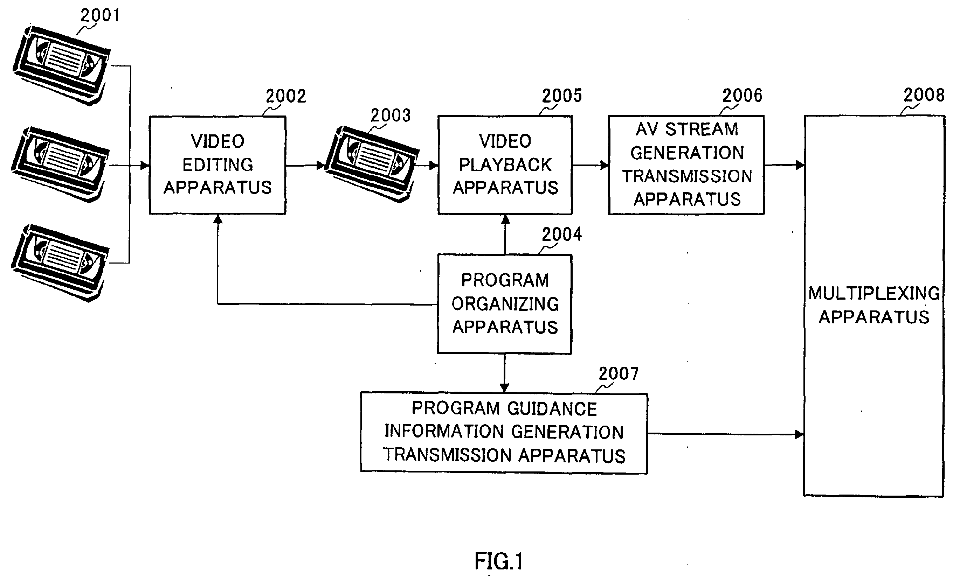

With reference to a broadcasting system illustrated in FIG. 1, a conventional technique for program broadcasting is explained below.

In the broadcasting system, reference numeral 2001 represents a plurality of video materials filmed for production of a program, reference numeral 2002 represents a video editing apparatus for production of one program by editing the video materials 2001, reference numeral 2003 represents an edited video prepared by editing the video materials 2001 at the video editing apparatus 2002, reference numeral 2004 represents a program organizing apparatus that performs program organizing to output a program schedule and program information, reference numeral 2005 represents a video playback apparatus that receives the edited video 2003 and plays the edited video back in accordance with the program schedule received from the program organizing apparatus 2004, reference numeral 2006 represents an AV stream generation transmission apparatus that receives video / audio which is reproduced by the video playback apparatus 2005 to convert the received video / audio into digital AV streams, and output the converted streams, reference numeral 2007 represents a program guidance information generation transmission apparatus that receives the program schedule and the program information from the program organizing apparatus 2004 to generate and transmit program guidance information, and reference numeral 2008 represents a multiplexing apparatus that receives the digital AV streams and the program guidance information from the AV stream generation transmission section 2006 and the program guidance information generation transmission apparatus 2007, respectively, to perform multiplexing and transmission.

In the broadcasting system as configured above, an explanation is given below on operation of program broadcasting.

Here, as examples of the program guidance information, the DVB / SI standard (EST300 468 Digital Broadcasting systems for television, sound and data services; Specification for Service Information (SI ) in Digital Video Broadcasting (DVB) systems (1998-2)) and the ARIB (Association of Radio Industries and Businesses) standard "ARIB STD-B10 (Standardized on June 19, 1997, Version 1.0)" are cited.

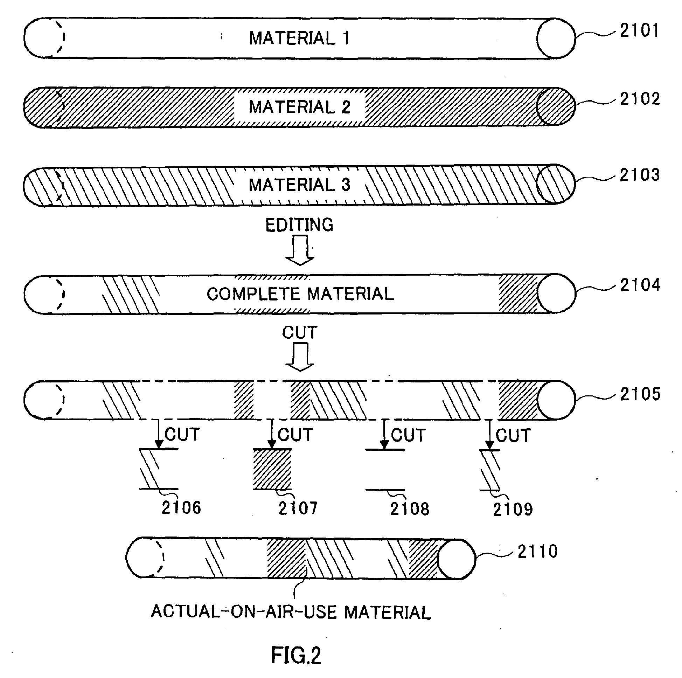

Video editing apparatus 2002 receives a plurality of video materials 2001, and a director edits the plurality of video materials to produce edited video 2003. An example of video editing at video editing apparatus 2002 is explained here with reference to FIG. 2.

It is assumed here that video materials inputted into video editing apparatus 2002 are three materials, 2101 - 2103. In line with the story, the director cuts and connects these materials 2101 - 2103 to produce one complete video material 2104. However, because of on-air time restriction for each program, sometimes, the complete video material 2104 could have a longer length than its fixed on-air time frame. Accordingly, the director then makes some cuts out of the video material 2104 in places. In this example, to make it into an appropriate length for its on-air time, scenes 2106 - 2109 are cut and removed from the complete video material 2104 to prepare actual-on-air-use material 2110. The prepared actual-on-air-use material 2110 is recorded into a video which is depicted as edited video 2003 in FIG. 1. In addition, video editing apparatus 2002 receives the program identifier of each program fromprogram organizing apparatus 2004, and inputs the produced edited video 2003 together with the channel identifier / the program identifier which is assigned to the program into video playback apparatus 2005. Here, for illustration purpose, it is assumed that an edited video having the channel identifier of "1" and the program identifier of "500" is inputted.

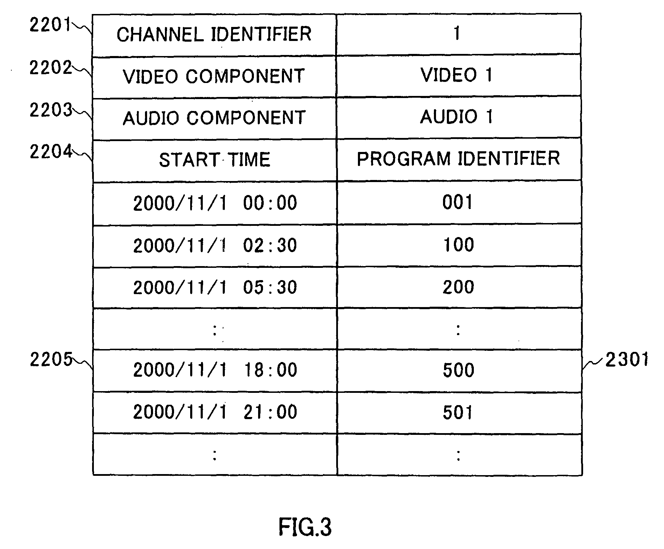

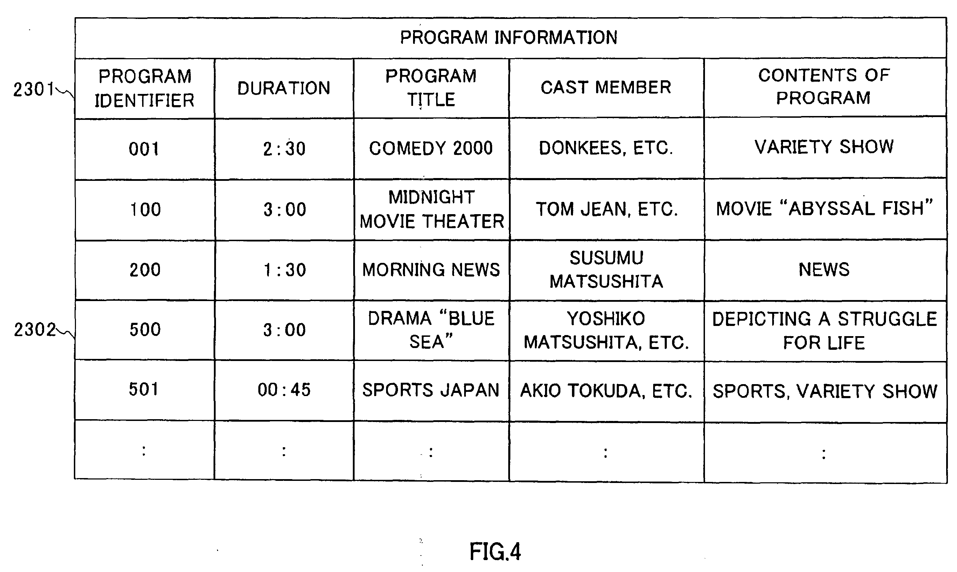

At program organizing apparatus 2004, a scheduler arranges, for example, a week of program schedule, and makes entries of the scheduled programs together with program information for each scheduled program. An example of a program schedule is illustrated in FIG. 3, while an example of program information is shown in FIG. 4. As illustrated in FIG. 3, a program schedule is scheduled on a channel-by-channel basis, where it is possible to identify which channel schedule it is by referring to channel identifier 2201. In addition, a program identifier is entered for the start time of each program (2202). For example, the program having program identifier 500 is scheduled to be aired from 18 : 00 o' clock on, on November 1^{st}, 2000 . As illustrated in FIG. 4, items of entries for program information include, for example, a program identifier, a program duration, a program title, persons who are supposed to appear on a program, and contents of a program, for each program. For example, the entries made for the program with the program identifier "500" read as the program duration of "three hours", the program title of "Drama *Blue Sea*", the cast member of "Yoshiko Matsushita", and the contents of the program of "Depicting a battle and struggle for the span of life." For each program, the program identifier ensures the correspondence between the program schedule and the program information.

Accepting entries of the program schedule and the program information, program organizing apparatus 2004 outputs the program schedule to video playback apparatus 2005, and outputs the program schedule and the program information to program guidance information generation transmission apparatus 2007.

After reception of edited video 2003 to which the program identifier is assigned and reception of the program schedule, video playback apparatus 2005 plays back edited video 2003 in accordance with the program schedule, and outputs the played-back signal together with the channel identifier to AV stream generation transmission apparatus 2006. For example, the replay of the program having channel identifier "1" and program identifier "500" is scheduled to be started at 18:00 o' clock, November 1^{st}, 2000.

AVstream generation transmission apparatus 2006 receives the video playback signal from the video playback apparatus 2005, and performs conversion of the video / audio together with separately-assigned video / audio component information to TS packet streams and outputs the converted streams.

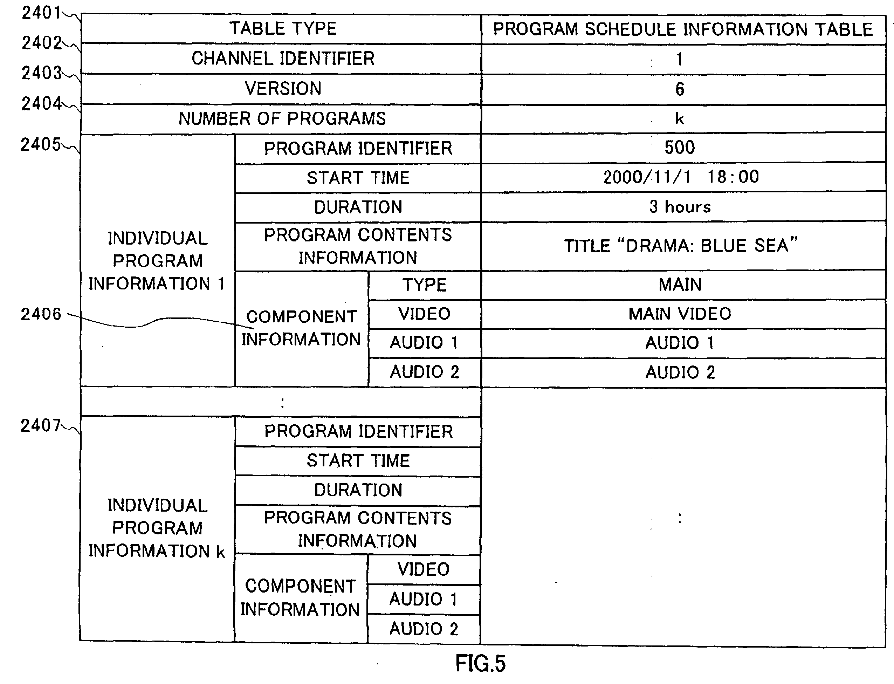

Program guidance information generation transmission apparatus 2007 receives the program schedule and the program information from the program organizing apparatus 2004 to generate program guidance information, and outputs the generated program guidance information to multiplexing apparatus 2008 after TS packet streaming. The program guidance information generated by the program guidance information generation transmission apparatus contains a channel information table in which channel information is written, a program schedule information table in which a program schedule for each channel and information on each program is written, and current program / next program information table in which information on the currently-aired / next program only is written. Here, an example of a program schedule information table is illustrated in FIG. 5 among the aforementioned tables.

The program schedule information table is made up of table identifier 2401, channel identifier 2402, version 2403, number of programs 2404, and individual program information 2405. In table type 2401, an identifier which indicates that the table is a program schedule information table is written. In channel identifier 2402, an identifier indicating the channel is written. Version 2403 indicates the version number of the program information table. The version number is counted up each time when there is a change in contents of any item after version 2403, which allows a data reception apparatus which received such a program schedule information table to detect a change in the program schedule information table by noting the change in the version number. Number of programs 2404 represents the number of programs listed in the program information table, and for the number of the listed programs, individual program information 2405 is written in loop iteration. Individual program information 2405 contains component information 2406 in addition to program contents information such as a program title. In component information 2406, component information related to the type and video / audio of the program is written. By referring to the component information, the data reception apparatus is able to uniquely identify video / audio transport stream packets which make up a program.

Upon reception of the video / audio TS packet streams and the program guidance information TS packet stream respectively from AV stream generation transmission apparatus 2006 and program guidance information generation transmission apparatus 2007, multiplexing apparatus 2008 multiplexes the received streams and outputs the multiplexed streams.

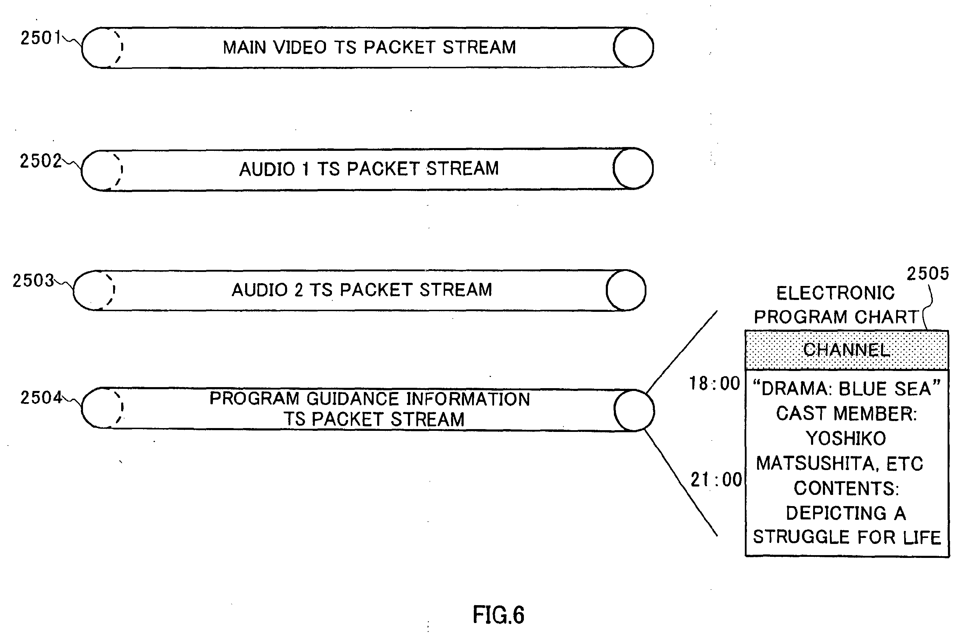

The output concept of multiplexing apparatus 2008 is illustrated in FIG. 6. Multiplexing apparatus 2008 outputs main video TS packet stream 2501, audio 1 TS packet stream 2502, and audio 2 TS packet stream 2503, which are received from AV stream generation transmission apparatus 2006, and program guidance information TS packet stream received from program guidance information generation transmission apparatus 2007.

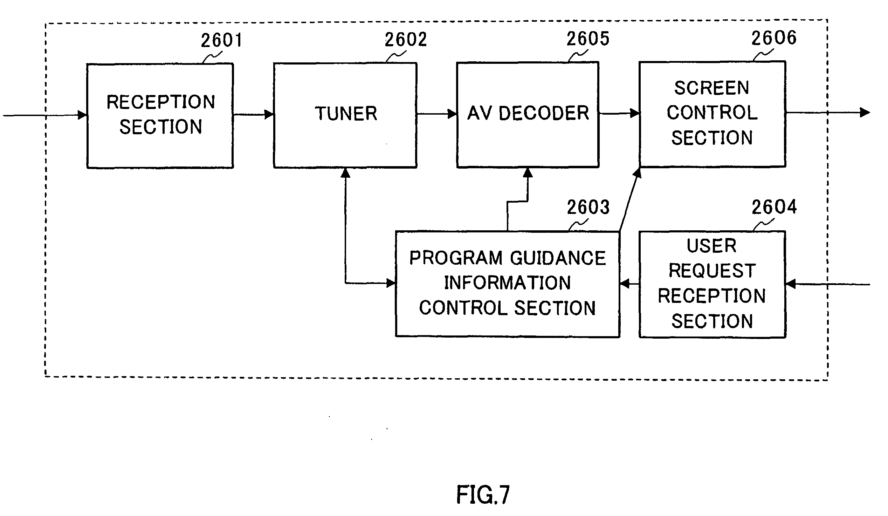

FIG. 7 illustrates a configuration example of a data reception apparatus. A data reception apparatus is made up of reception section 2601, tuner 2602, program guidance information control section 2603, user request reception section 2604, AV decoder 2605, and screen control section 2606. The reception section receives a TS packet stream for each TS entering through an antenna which is not shown in the diagram. Tuner 2602 captures the TS packet streams of designated TS, where designation is made by program guidance information control section 2603, and outputs the AV TS packet streams to AV decoder 2605 and the program guidance information TS packet stream to program guidance information control section 2603. Program guidance information control section 2603 decodes the program guidance information TS packet stream. Upon issuance of a request from a user using a remote controller which is not shown in the diagram for display of an electronic program chart, the program guidance information control section receives the request from the user for the display of the electronic program chart via user request reception section 2604. Receiving the request for the display of the electronic program chart, program guidance information control section 2603 generates an electronic program chart from the program guidance information and outputs the generated chart to screen control section 2606. Screen control section 2606 displays the electronic program chart on a television display apparatus not shown in the diagram. An example of the electronic program chart is illustrated with 2505 in FIG. 6. A TV viewer makes selection of a program which s/he wants to view on the electronic program chart with the use of a remote controller not shown in the diagram. The not-shown remote controller outputs the program which is selected by the viewer as a program selection request to user request reception section 2604. Program guidance information control section 2603 receives the program selection request via user request reception section 2604, and outputs the selected-channel TS information to tuner 2602 and selected-channel video / audio component information to AV decoder 2605. Receiving the selected-channel TS information, tuner 2602 selects the TS packet streams of the selected channel, and outputs the AV TS packet streams to AV decoder 2605. Receiving the AV TS packet streams and the selected-channel video / audio component information, AV decoder 2605 extracts selected-channel video / audio components out of the AV TS packet streams, and decodes the extracted components to output the decoded components to screen control section 2606. Upon reception of the decoded video / audio, screen control section 2606 outputs the video / audio on a not-shown television display apparatus.

As described above, video / audio and program guidance information generated and transmitted by a broadcasting system is received by data reception apparatuses to be viewed by TV viewers.

As illustrated in FIG. 2, however, due to on-air time restriction, it is not possible for a program producer to air his/her original production of the complete program material 2104, and instead he/she has to make some cuts out of the original, in places, to broadcast the material 2110 which is shortened to fit with the on-air time frame.

### DESCRIPTION OF THE INVENTION

To deal with such a problem, according to the present invention, while an actual-on-air-use material produced to fit with its on-air program time frame is aired, a multi-view storage broadcastingserviceairsastorageplaybackcontrol table in which the cut portions of the material as well as the cut places in the actual-on-air-use material from which the cut portions of the material are taken out are written, which enables the data reception apparatus that received the program to store the actual-on-air-use material and the cut portions of the material and then to weave and connect theactual-on-air-usematerialwiththecutportions of the material by referring to the storage playback control table, thereby playing back the woven-together, connected material. This allows a program producer to air his/her original production of a complete program without having to extend the on-air time of a program by program organizing, and in addition to that, it allows viewers to enjoy a director's cut version of a program as well as a normal program.

### BRIEF DESCRIPTION OF THE DRAWINGS

FIG. 1 is a block diagram illustrating a configuration of a conventional broadcasting system;
FIG. 2 is a diagram illustrating an example of a conventional video editing;
FIG. 3 is a diagram illustrating a configuration of a conventional program schedule;
FIG. 4 is a diagram illustrating a configuration of conventional program information;
FIG. 5 is a diagram illustrating a configuration of a conventional program schedule information table;
FIG. 6 is a diagram illustrating the output concept of a conventional multiplexing apparatus;
FIG. 7 is a block diagram illustrating a configuration example of a conventional data reception apparatus;
FIG. 8 is a block diagram illustrating the configuration of a broadcasting system which provides a storage program broadcasting service according to Embodiment 1 of the present invention;
FIG. 9 is a diagram illustrating the configuration of a data transmission apparatus in a broadcasting system which provides a storage program broadcasting service according to Embodiment 1 of the present invention;
FIG. 10 is a diagram depicting a method for production of cut portions of a material according to Embodiment 1 of the present invention;
FIG. 11 is a diagram illustrating the configuration of a storage playback control table according to Embodiment 1 of the present invention;
FIG. 12 is a chart illustrating the generation processing flow of a storage playback control table according to Embodiment 1 of the present invention;
FIG. 13 is a chart illustrating the generation processing flow of a storage playback control table according to Embodiment 1 of the present invention;
FIG. 14 is a diagram illustrating the configuration of a program schedule according to Embodiment 1 of the present invention;
FIG. 15 is a diagram illustrating the configuration of program information according to Embodiment 1 of the present invention;
FIG. 16 is a diagram illustrating the configuration of a storage playback control table with program start time according to Embodiment 1 of the present invention;
FIG. 17 is a diagram illustrating the configuration of a program schedule information table according to Embodiment 1 of the present invention;
FIG. 18 is a diagram illustrating the output concept of a multiplexing apparatus according to Embodiment 1 of the present invention;
FIG. 19 is a diagram illustrating the configuration of a data reception apparatus in a broadcasting system whichprovidesastorageprogram broadcasting service according to Embodiment 1 of the present invention;
FIG. 20 is a chart illustrating the processing flow of storage processing according to Embodiment 1 of the present invention;
FIG. 21 is a diagram illustrating the configuration of information managed by a storage section, when a storage playback program is stored, according to Embodiment 1 of the present invention;
FIG. 22 is a chart illustrating the flow of storage playback start processing according to Embodiment 1 of the present invention;
FIG. 23 is a chart illustrating the flow of storage program playback processing according to Embodiment 1 of the present invention;
FIG. 24 is a chart illustrating the flow of storage program playback processing according to Embodiment 1 of the present invention;
FIG. 25 is a chart illustrating the flow of storage program playback processing according to Embodiment 1 of the present invention;
FIG. 26 is a diagram depicting a method for playback of a storage program according to Embodiment 1 of the present invention;
FIG. 27 is a diagram illustrating the configuration of a program schedule according to Embodiment 2 of the present invention;
FIG. 28 is a diagram illustrating the configuration of a storage playback control table according to Embodiment 2 of the present invention;
FIG. 29 is a diagram illustrating the configuration of program information according to Embodiment 2 of the present invention;
FIG. 30 is a diagram illustrating the configuration of a program schedule information table according to Embodiment 2 of the present invention;
FIG. 31 is a block diagram illustrating the configuration of a broadcasting system which provides a storage program broadcasting service according to Embodiment 3 of the present invention; and
FIG. 32 is a chart illustrating the flow of billing processing according to Embodiment 3 of the present invention;

### BEST MODE FOR CARRYING OUT THE INVENTION

Embodiments of the present invention will be described below with reference to the accompanying drawings.

### (Embodiment 1)

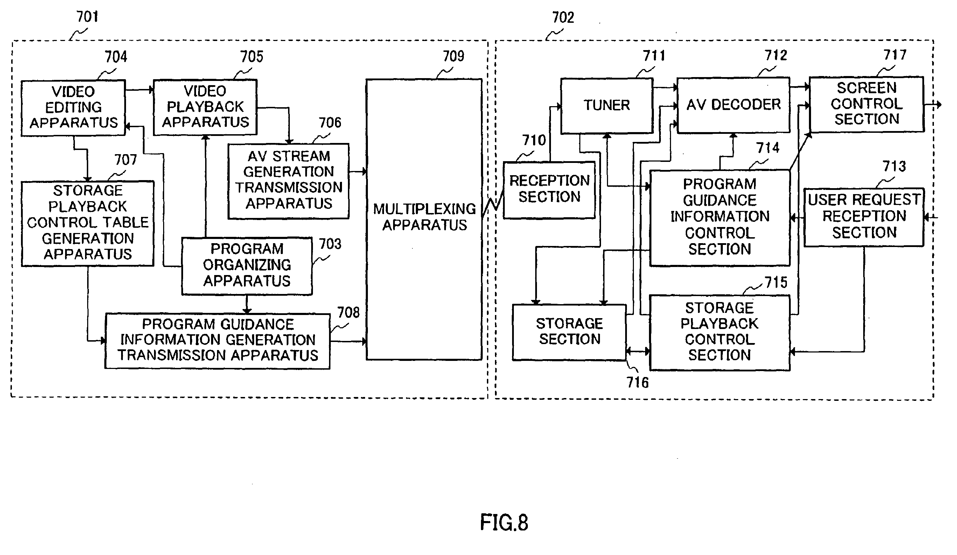

FIG. 8 illustrates a configuration example of a broadcasting system which implements a multi-view storage broadcasting service.

Reference numeral 701 represents a data transmission apparatus, which is made up of: video editing apparatus 704 which produces a program material and cut portions of the material by editing video / audio; storage playback control table generation apparatus 707 that generates a storage playback control table in which the cut information on the cut portions of the material is written; program organizing apparatus 703 that performs program organizing to output a program schedule and program information; video playback apparatus 705 that plays edited video and the cut portions of the material video back in accordance with the program schedule received from the program organizing apparatus 703; AV stream generation transmission apparatus 706 that receives video / audio which is reproduced by the video playback apparatus 705 to convert the received video / audio into digital AV streams, and output the converted streams; program guidance information generation transmission apparatus 708 that receives the program schedule and the program information from the program organizing apparatus 703 to generate a table which makes up a variety of program guidance information, and outputs the generated table in addition to the storage playback control table received from the storage playback control table generation apparatus 707. as program guidance information; and multiplexing apparatus 709 that receives the digital AV streams and the program guidance information from the AV stream generation transmission section 706 and the program guidance information generation transmission apparatus 708, respectively, to perform multiplexing and transmission. Reference numeral 702 is a data reception apparatus, which is made up of: reception section 710 that receives the multiplexed video / audio stream packets and program guidance information stream packets through the transmission path; tuner 711 that receives the video / audio stream packets and the program guidance information stream packets from the reception section 710, then provides the program guidance information stream to program guidance information control section 714, and outputs the video / audio streams to storage section 716 and AV decoder 712; AV decoder 712 that decodes video / audio component streams requested by the program guidance information control section 714 among the video / audio streams received from tuner 711, thereby outputting the video / audio, and that decodes video / audio component streams requested by the storage playback control section 715 among the video / audio streams received from storage section 716, thereby outputting the video / audio; user request reception section 713 that receives an electronic program chart display request, a program channel-selection request, a storage request, a stored program display request, and a storage playback request from a user with the use of an external remote controller which does not appear in the diagram, outputs the electronic program chart display request and the program channel-selection request to the program guidance information control section 714, and outputs the storage request, the stored program display request, and the storage playback request to the storage playback control section 715; program guidance information control section 714 that decodes the program guidance information stream to generate and output an electronic program chart in a case where the electronic program chart display request is received, that identifies the currently-aired program tracing from the channel identifier which is written in the program channel-selection request, and acquires the video / audio component information corresponding to the identified program out of the program guidance information stream to request the AV decoder 712 to decode the acquired components in a case where the program channel-selection is received, and that outputs the storage playback control table of the stored program as well as the program start time and the storage start time thereof to the storage section 716, and in addition to that, requests the tuner 711 to output video component and audio component corresponding to all component information of the stored program to the storage section 716 in a case where the storage request is received; storage playback control section 715 that generates a storage program chart for displaying the all stored programs which are stored in the storage section 716 to output the generated chart to screen control section 717 in a case where the storage program display request is received and that outputs component of the stored programs which are stored in the storage section 716 to the AV decoder 712 in accordance with the storage playback control table in a case where the storage playback request is received; storage section 716 that stores and manages the storage playback control table of the stored program as well as the program start time and the storage start time thereof and also stores and manages the video component and the audio component corresponding to the all component information of the stored program, and outputs the stored information in response to a request from the storage playback control section 715; and display control section 717 that allows the video / audio outputted from the AV decoder 712 and the electronic program chart outputted from the program guidance information control section 714 to be displayed on a screen which is not shown in the diagram.

In the multi-view storage broadcasting system as configured above, an explanation is given below on operation of program broadcasting.

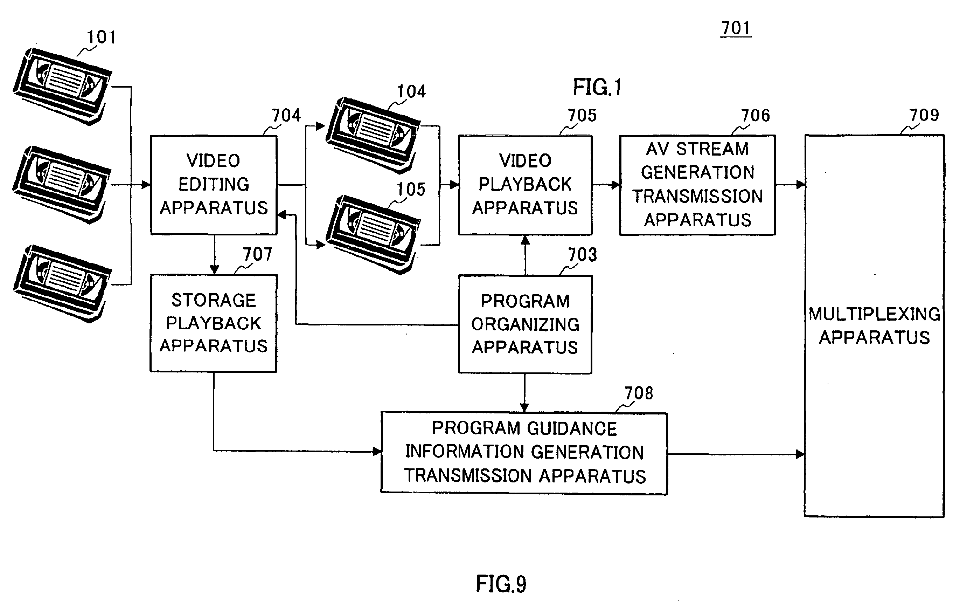

FIG. 9 is a configuration example of data transmission apparatus 701 extracted from the multi-view storage broadcasting system. To each component in FIG. 9 which is identical to the corresponding component in FIG. 8, the identical reference numeral is assigned.

In data transmission apparatus 701, reference numeral 101 represents a plurality of video materials filmed for production of a program, reference numeral 704 represents a video editing apparatus for production of a program material and cut portions of an original material by editing the video materials 101, reference numeral 707 represents a storage playback control table generation apparatus that generates a storage playback control table in which the cut information for the cut portions of material is written, reference numeral 104 represents a program material video which is used as a program material and is prepared by editing the video materials 101 at the video editing apparatus 704, reference numeral 105 represents a cut material video which is a collection of the cut portions of material which are cut and removed when producing the edited program material video 104, reference numeral 703 represents a program organizing apparatus that performs program organizing to output a program schedule and program information, reference numeral 705 represents a video playback apparatus that receives the program video 104 and the cut material video 105 and plays back the program video 104 and the cut material video 105 in accordance with the program schedule received from the program organizing apparatus 703, reference numeral 706 represents an AV stream generation transmission apparatus that receives video / audio which is played back by the video playback apparatus 705 to convert the received video / audio into digital AV streams, and output the converted streams, reference numeral 708 represents a program guidance information generation transmission apparatus that receives the program schedule and the program information from the program organizing apparatus 703 to generate a table which makes up a variety of program guidance information and outputs the generated table in addition to the storage playback control table received from the storage playback control table generation apparatus 707 as program guidance information, and reference numeral 709 represents a multiplexing apparatus that receives the digital AV streams and the program guidance information from the AV stream generation transmission section 2006 and the program guidance information generation transmission apparatus 2007, respectively, to perform multiplexing and transmission.

Video editing apparatus 704 receives a plurality of video materials 101, and a director edits the plurality of video materials to produce program material video 104. Program material video editing is done at video editing apparatus 704 in the same manner as the conventional editing example.

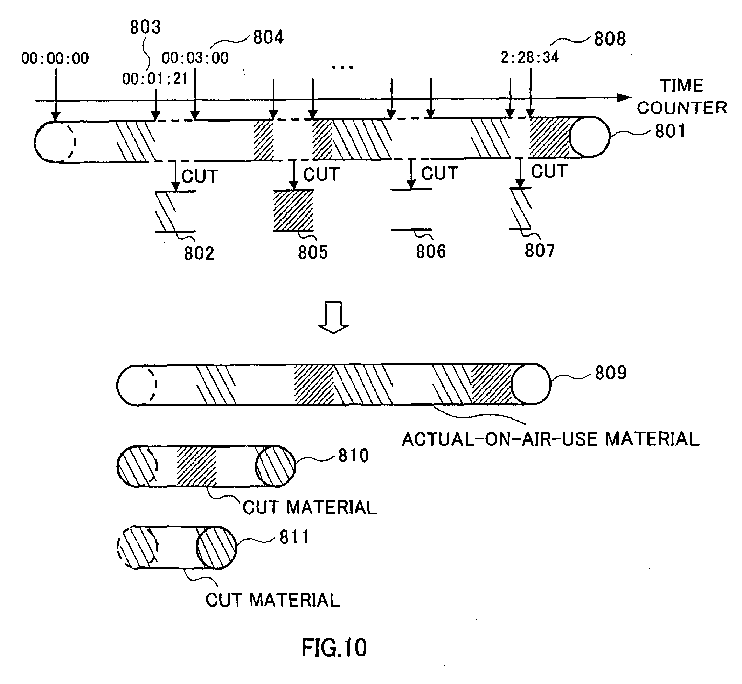

In addition, cut portions of a material are produced at video editing apparatus 704. With reference to FIG. 10, an example is given below on the production method of cut portions of a material.

At video editing apparatus 704, when portions of the material are cut out of complete material 801, a start time counter and a finish time counter for each cut portion of the material are recorded, with the beginning time of the material set at "time counter = 00:00:00." For example, when portion-of-material 802 is cut out of complete material 801, its start time counter 803 with the start time of "00: 01 : 21" and its finish time counter 804 with the finish time of "00: 03:00" is outputted to storage playback control table generation apparatus 707. The same procedure is also followed on the remaining cut-portions-of-material 805 - 807 to produce actual-on-air-use material 809 and cut material 810. Video editing apparatus 704 receives a program identifier of each program, a channel identifier of a channel which airs a program, video / audio component information which makes up a channel, and a storage playback control identifier from program organizing apparatus 703. Video editing apparatus 704 assigns the program identifier and the channel identifier to the generated actual-on-air-use material 809 and the generated cut material 810 to output the generated materials with the assigned identifiers to video playback apparatus 705. For example, video editing apparatus 704 assigns "a channel identifier = 1" and "a program identifier = 500" to actual-on-air-use material 809, and assigns "a channel identifier = multi-view 1" and "a program identifier = 500" to cut material 810, and outputs the materials with identifiers. In addition, video editing apparatus 704 outputs the storage playback control identifier, video / audio component information corresponding to the channel on which actual-on-air-use material 809 is aired, video / audio component information corresponding to the channel on which cut material 810 is aired, and all of the recorded start time counters and finish time counters to storage playback control table generation apparatus 707. For example, video editing apparatus 704 outputs information such as "storage playback control identifier = 1", "video component of actual-on-air-use material 809 = video 1", "audio componentof actual-on-air-use material 809 = audio 1", "video component of cut material 810 = video 2", "audio component of cut material 810 = audio 2", "start time counter = 00:01:21 / finish time counter = 00:03:00", and "start time counter = --- " to storage playback control table generation apparatus 707.

Storage playback control table generation apparatus 707 generates a storage playback control table.

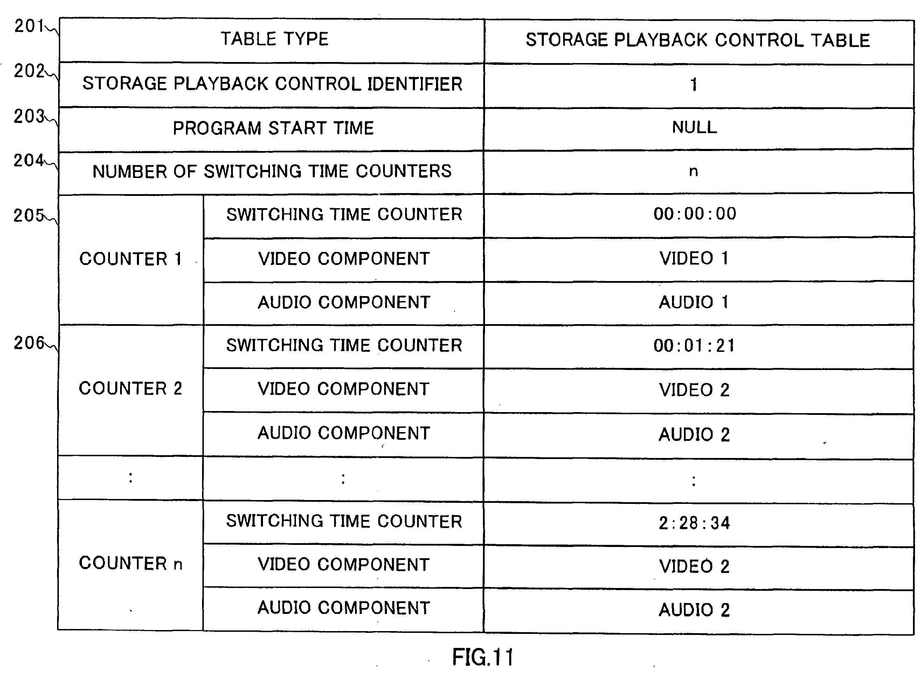

FIG. 11 illustrates a configuration example of a storage playback control table. A storage playback control table is made up of table type 201, storage playback control identifier 202, program start time 203, number of switching time counters 204, and a loop iteration of counter information 205, 206, ---. In table type 201, an identifier which indicates that the table is a storage playback control table is written. In storage playback control identifier 202, the storage playback control identifier received from the video editing apparatus 704 is written. No setting is supposed to be made in program start time 203 by storage playback control table generation apparatus 707. In number of switching time counters 204, the number of counter information looped below is written. In each of counter information 205, 206, ---, a switching time counter, video component information, and audio component information are written. For the first counter information 205, its switching time counter is set at "00: 00:00", and video / audio component of the material which is to be used first is written therein. In a case where there is an entry of "00: 00: 00" in the start time counter received from the video editing apparatus 704, video / audio component information of cut material 810 is written in these video and audio component fields. For each subsequent counter information, a start time counter / a finish time counter is written in the switching time counter, where video / audio component information of cut material 810 is written in a case of the start time counter while video / audio component information of actual-on-air-use material 809 is written in a case of the finish time counter to complete the storage playback control table.

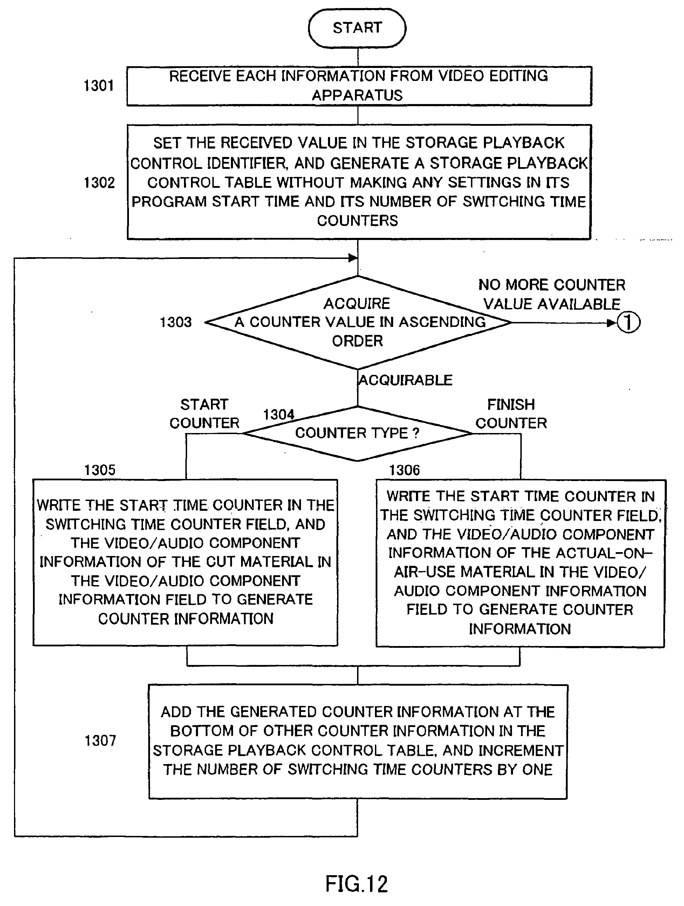

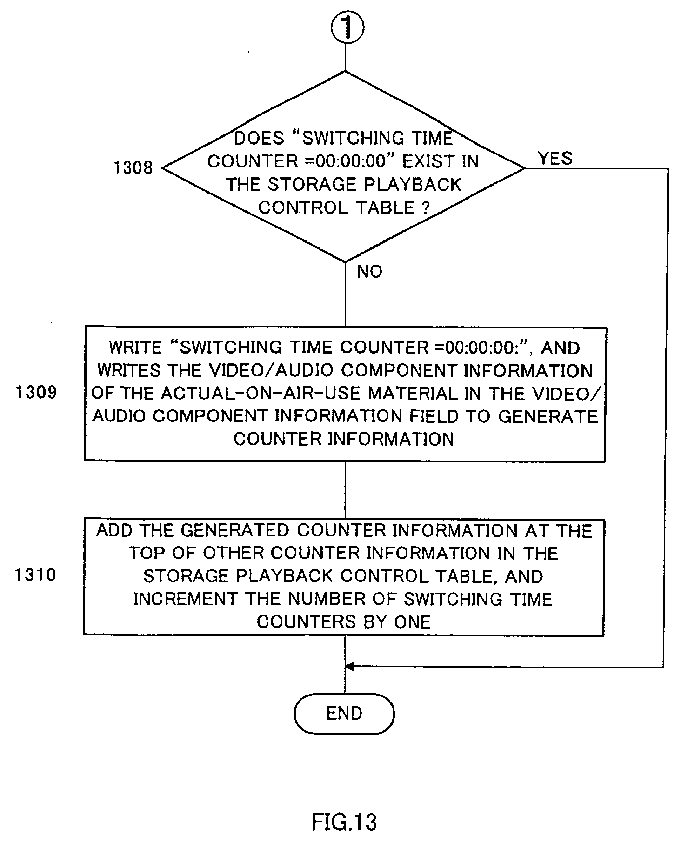

An explanation is given below on the generation method of a storage playback control table in storage playback control table generation apparatus 707 with reference to FIG. 12 and FIG. 13.

Storage playback control table generation apparatus 707 receives a storage playback control identifier, video / audio component information corresponding to the actual-on-air-use material, video / audio component information corresponding to the cut material, and all of the start time counters and finish time counters (step 1301).

Storage playback control table generation apparatus 707 then sets the value received in step 1301 in the storage playback control identifier, and generates a storage playback control table without making any settings on its program start time and its number of switching time counters (step 1302).

Next, storage playback control table generation apparatus 707 acquires a counter one by one in ascending order of counter values among the start time counters and the finish time counters received in step 1301 (step 1303).

Depending on which of the start time counter or the finish time counter is acquired in step 1303, storage playback control table generation apparatus 707 changes counter information to be generated (step 1304).

In a case where the counter is a start time counter in step 1304., storage playback control table generation apparatus 707 writes the start time counter in the switching time counter field, and the video / audio component information of the cut material in the video / audio component information field to generate counter information (step 1305).

In a case where the counter is a finish time counter in step 1304, storage playback control table generation apparatus 707 writes the start time counter in the switching time counter field, and the video / audio component information of the actual-on-air-use material in the video / audio component information field to generate counter information (step 1306).

Storage playback control table generation apparatus 707 adds the counter information generated in steps 1305, 1306 at the bottom of other counter information in the storage playback control table, and increments the number of switching time counters by one, and then the procedure goes back to step 1303 (step 1307).

In a case where all counters are processed in steps 1303 - 1307, storage playback control table generation apparatus 707 checks whether the first counter information having "switching time counter =00: 00: 00" exists or not among the generated storage playback control table (step 1308).

In a case where there is no counter information having "switching time counter =00:00:00" in step 1308, storage playback control table generation apparatus 707 writes "switching time counter =00:00:00" in the switching time counter field, and the video / audio component information of the actual-on-air-use material in the video / audio component information field to generate counter information (step 1309).

Storage playback control table generation apparatus 707 then adds the counter information generated in step 1309 at the top of other counter information in the storage playback control table, and increments the number of switching time counters by one to complete the storage playback control table (step 1310).

In a case where counter information having "switching time counter =00:00:00" exists in step 1308, or in a case where counter information having "switching time counter =00:00:00"is added in step 1310, storage playback control table generation apparatus 707 finishes the generation of the storage playback control table, and outputs the generated storage playback control table to program guidance information generation transmission apparatus 708.

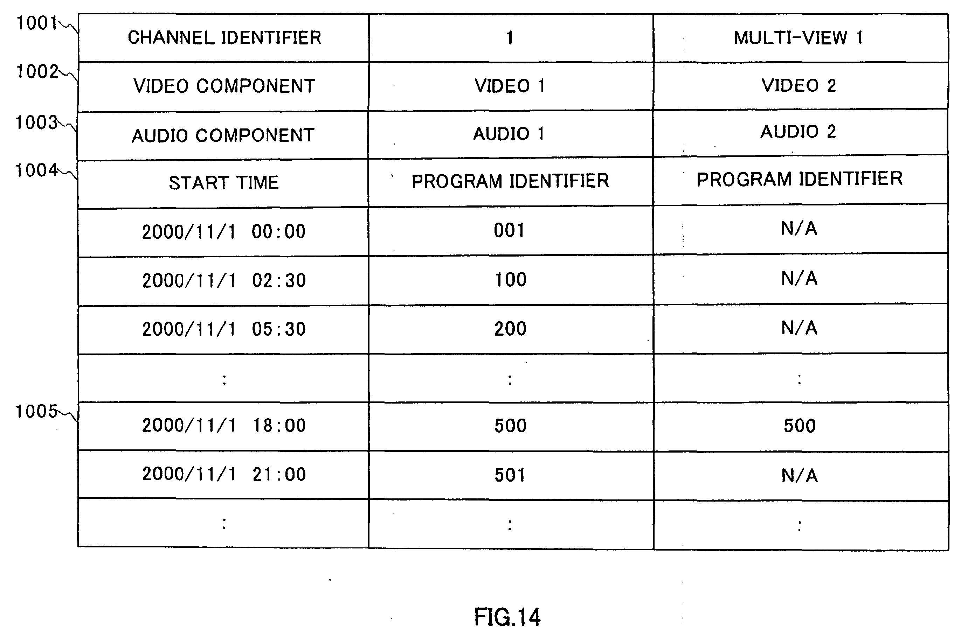

At program organizing apparatus 703, a scheduler arranges, for example, a week of program schedule, and makes entries of the scheduled programs together with program information for each scheduled program. FIG. 14 illustrates a configuration example of a program schedule. A program schedule is made up of a channel identifier, video component as well as audio component corresponding to a channel, a start time of each program, and a program identifier. For example, in a program schedule illustrated in FIG. 14, there is an entry of "a channel identifier = 1, multi-view channel 1" (1001), where video component of the channel identifier= 1 is video 1, and audio component thereof is audio 1. In addition, for each channel, start times and program identifiers are entered in loop iteration (1004). Reference numeral 1005 is an entry indicating that a program with program identifier = 500 is scheduled to be aired with the start time = 18:00 o'clock, November 1^{st}, 2000 in channel identifier = 1 and multi-view 1.

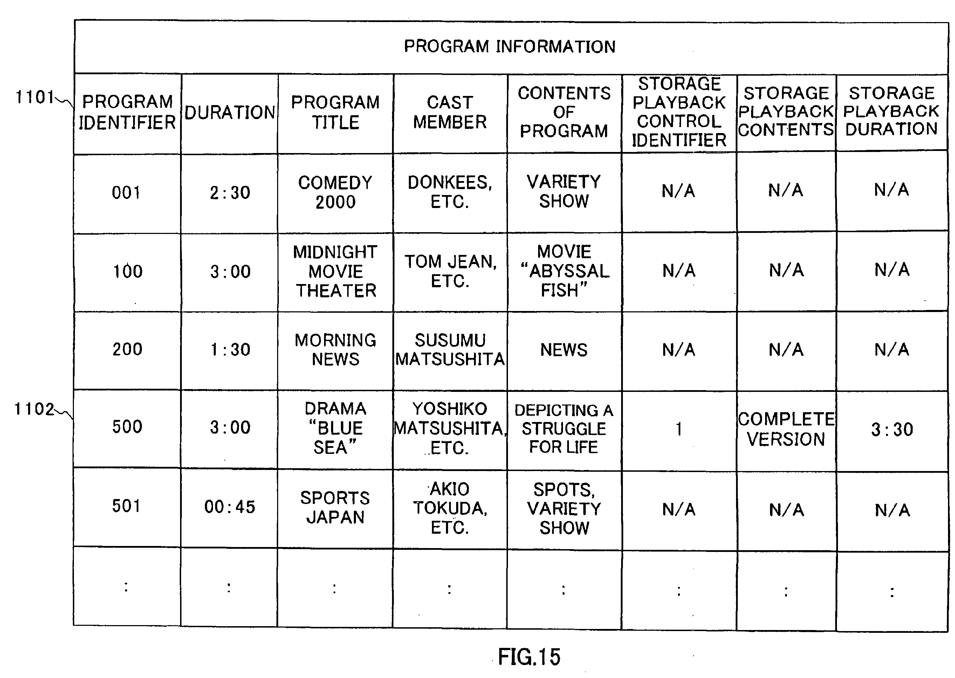

An example of program information is illustrated in FIG. 15. Items of entries for program information include, for example, a program identifier, a program duration, a program title, persons who are supposed to appear on a program, contents of a program, a storage playback control identifier, contents of storage playback, and a storage playback duration, for each program. The contents of storage playback and the storage playback duration are information which has meaning only when an effective value is placed in the storage playback control identifier, and they are items of entries for writing the contents information of the storage playback program and the duration of the storage playback program, respectively, therein. For example, the entries made for the program with the program identifier "500" read as the program duration of "three hours", the program title of "Drama *Blue Sea",* the cast member of "Yoshiko Matsushita", the contents of the program of "Depicting a battle and struggle for the span of life", the storage playback control identifier of an effective value "1", the contents of storage playback of a "complete version", and the storage playback duration of "three hours and thirty minutes." For each program, the program identifier ensures the correspondence between the program schedule and the program information.

After organizing the program schedule and the program information, program organizing apparatus 703 outputs the program schedule and the program information to video playback apparatus 705 and program guidance information generation transmission apparatus 708, and at the same time, outputs the program information to video editing apparatus 704.

After reception of actual-on-air-use material 104 and cut material 105 to which the channel identifier and the program identifier are assigned and reception of the program schedule, video playback apparatus 705 plays back each material of 104 and 105 in accordance with the program schedule, and outputs the played-back signal together with the video / audio component information to AV stream generation transmission apparatus 706. For example, the replay of actual-on-air-use material 104 and cut material 105 having channel identifier "1" and program identifier "500" is scheduled to be started each at 18:00 o'clock, November 1^{st}, 2000.

AV stream generation transmission apparatus 706 receives the video playback signal from the video playback apparatus 705, and performs conversion of the video / audio together with separately-assigned video / audio component information to TS packet streams and outputs the converted streams.

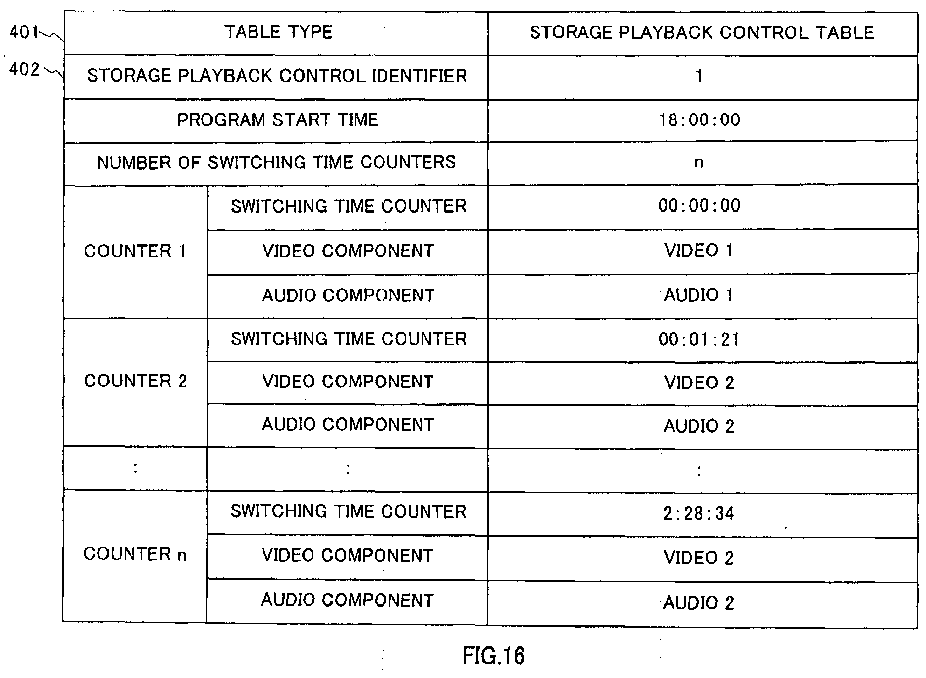

Program guidance information generation transmission apparatus 708 receives the program schedule and the program information from the program organizing apparatus 703 to generate program guidance information, and outputs the generated program guidance information together with the storage playback control table received from the storageplaybackcontroltable generation apparatus 707 to multiplexing apparatus 709 after TS packet streaming. At that time, program guidance information generation transmission apparatus 708 fills in the item of the program start time in the storage playback control table with information according to the program schedule, thereby complementing the table. FIG. 16 illustrates the storage playback control table with the complemented program start time. Program guidance information generation transmission apparatus 708 searches for the program which corresponds to "storage playback control identifier = 1" (401) in the storage playback control table through the program information in FIG. 15, and it is found that the searched program is the program having "program identifier = 500" (1102). Furthermore, it is found from the program schedule in the FIG. 14 that the program with the "program identifier = 500" is scheduled to be aired from 18: 00 o' clock, November 1^{st}, 2000. This allows program start time 402 to be set at "18:00 o'clock, November 1^{st}, 2000."

In addition, the program guidance information generated by program guidance information generation transmission apparatus 708 contains a channel information table in which channel information is written, a program schedule information table in which a program schedule for each channel and information on each program is written, and current / next program information table in which information on the currently-aired / next-aired programs only is written.

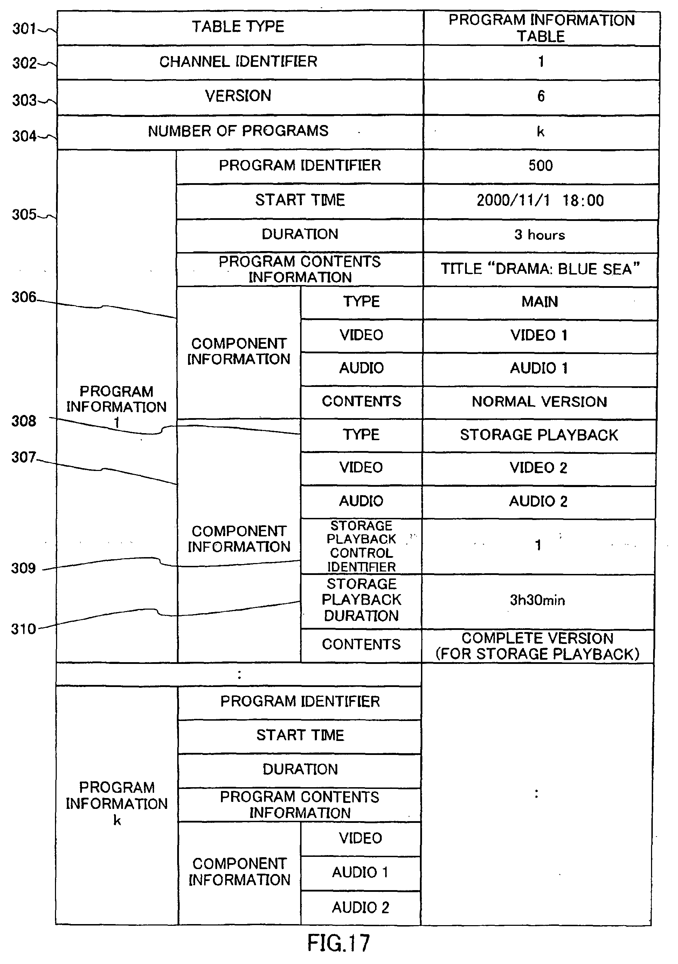

Here, an example of a program schedule information table is illustrated in FIG. 17 among the aforementioned tables. The program schedule information table is made up of table identifier 301, channel identifier 302, version 303, number of programs 304, and program information 305. In table type 301, an identifier which indicates that the table is a program schedule information table is written. In channel identifier 302, an identifier indicating the channel is written. Version 303 indicates the version number of the program information table. The version number is counted up each time when there is a change in contents of any item after version 303, which allows a data reception apparatus which received such a program schedule information table to detect a change in the program schedule information table by noting the change in the version number. Number of programs 304 represents the number of programs listed in the program information table, and for the number of the listed programs, individual program information 305 is written in loop iteration. Individual program information 305 contains component information 306 in addition to program contents information such as a program title. In component information 306, component information related to the type and video / audio of the program is written, and in addition to that, supposing that the program is a type of a program which is supported by a multi-view storage broadcasting service, storage playback program component information 307 is additionally provided as well as main component information 306. In the settings of storage playback program component information 307, the type field is filled in with, for example, "type = storage playback", and the video / audio component information field with the multi-view 1 video / audio component information listed in the program schedule in FIG. 14, and in addition, the storage playback control identifier and the storage playback duration listed in the program information 1102 enter in storage playback control identifier 309 and storage playback duration 310, respectively. In this way, as the component information related to video / audio is information for identification of video / audio transport stream packets, with this component information, a data reception apparatus is able to uniquely identify video / audio transport packets which make up a program.

Upon reception of the video / audio TS packet streams and the program guidance information TS packet stream respectively from AV stream generation transmission apparatus 706 and program guidance information generation transmission apparatus 708, multiplexing apparatus 709 multiplexes the received streams and outputs the multiplexed streams.

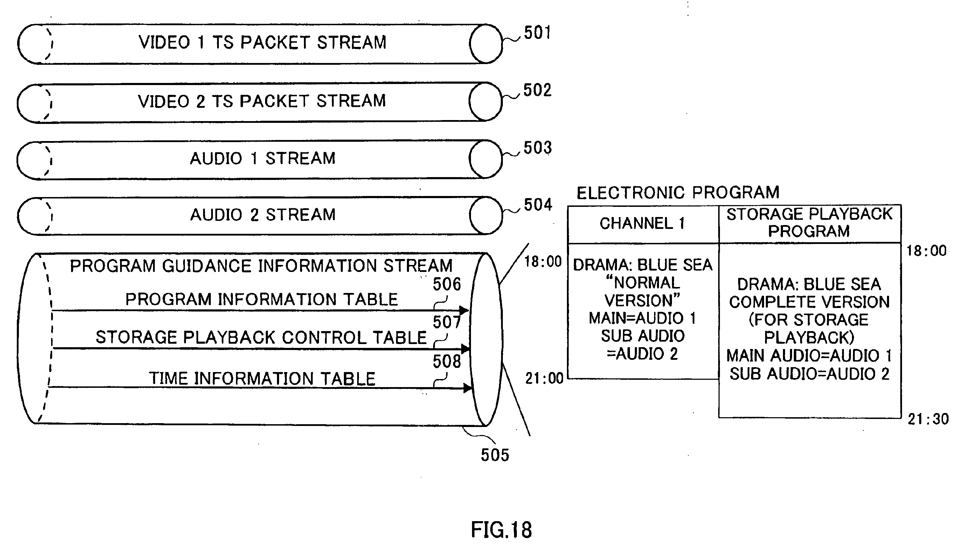

The output concept of multiplexing apparatus 709 is illustrated in FIG. 18. Multiplexing apparatus 709 outputs video 1 TS packet stream 501 to be used as main video, audio 1 TS packet stream 503 to be used as main audio, video 2 TS packet stream 502 to be used as storage video, and audio 2 TS packet stream 503 to be used as storage audio, which are received from AV stream generation transmission apparatus 706, and program guidance information TS packet stream 505 received from program guidance information generation transmission apparatus 109. Here, in transmitted program guidance information TS packet stream 505, time information table 508 indicating the current time as well as program information table 506 and storage playback control table 507 are contained. Receiving time information table 508, the data reception apparatus recognizes the current time as the time written in the received time information table.

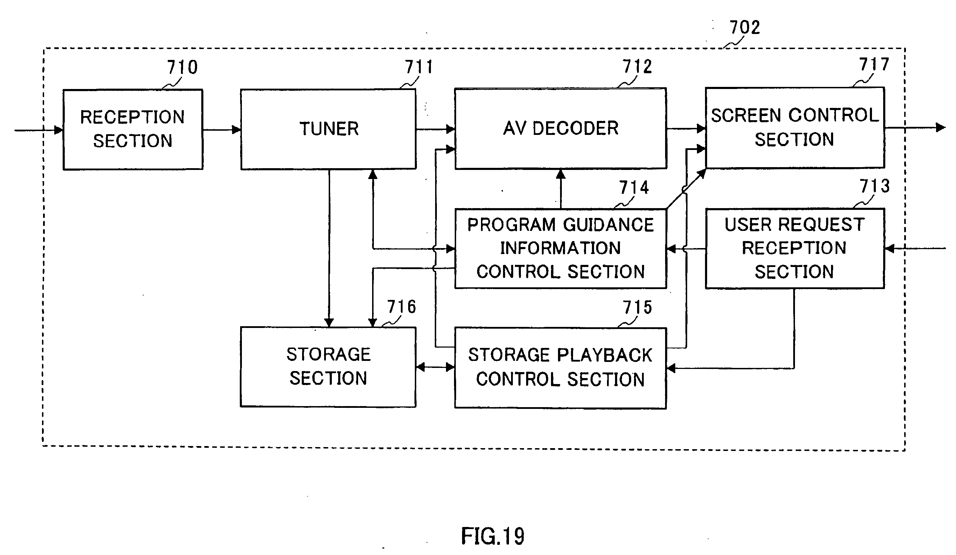

FIG. 19 is a configuration example of data reception apparatus 702 extractedfrom a multi-view storage broadcasting system. Data reception apparatus 702 is made up of control section 710, tuner 711, program guidance information control section 714, user request control section 713, AV decoder 712, screen control section 717, storage section 716, and storage playback control section 715. Normal program viewing operation which does not involve storing is performed in the same manner as done in the conventional example.

Here, the operation for a case where storage and playback processing is performed is described.

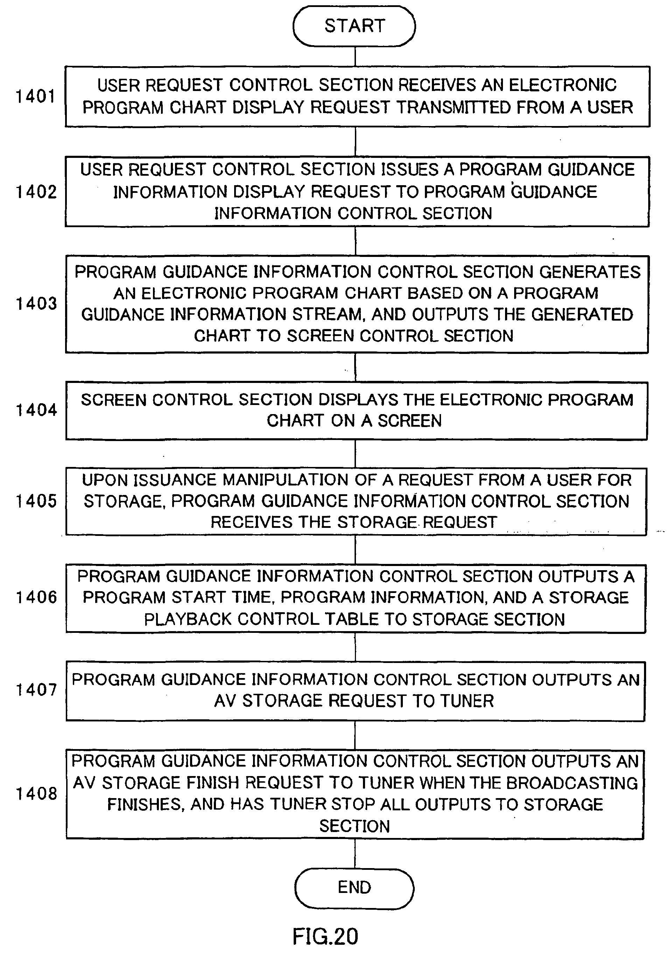

With reference to FIG. 20, an example is given below on the processing flow of storage processing.

First, user request control section 713 receives an electronic program chart display request transmitted from a user with the use of a remote controller which is not shown in the diagram (step 1401) .

Upon reception of the electronic program chart display request, user request control section 713 issues a program guidance information display request to program guidance information control section 714 (step 1402).

Receiving the program guidance information display request, program guidance information control section 714 generates an electronic program chart by decoding the program guidance information stream acquired from tuner 711 and outputs the generated chart to screen control section 717 (step 1403).

Screen control section 717 displays the decoded electronic program chart on a screen not shown in the diagram (step 1404).

Reference numeral 509 in FIG. 18 represents an example of an electronic program chart in which a program supported for storage program use having program identifier 500, which is described above with reference to FIG. 17, is charted. In the example here, it is noted that program 510 titled as "Drama: *Blue Sea*" which is aired on the channel having channel identifier = 1 is also aired as a storage playback program, where the storage playback version has an extended 30 minute of additional air time over normal version 510.

Upon issuance of a request from a user using a r'emote controller which is not shown in the diagram for storage of storage playback program 511 on an electronic program chart, program guidance information control section 714 receives the storage request via user request control section 713 (step 1405) .

Receiving the storage request, program guidance information control section 714 outputs a program start time to be used as a storage start time, program information of the program extracted from a program information table, and a storage playback control table having the storage playback control identifier to storage section 716. Herein, in a case where the program has already started to be on air, the current time acquired from a time information table is used (step 1406).

Next, program guidance information control section 714 issues to tuner 711 an AV storage request, which is a request for outputting all video / audio components corresponding to the program identifier of the program being requested to be stored to storage section 716 at the timing of the program start time of the program being requested to be stored (step 1407) . Upon the completion of the broadcasting of the program, program guidance information control section 714 outputs an AV storage finish request to tuner 711, and then, tuner 711 stops all component outputs to storage section 716, which completes the storage processing (step 1408).

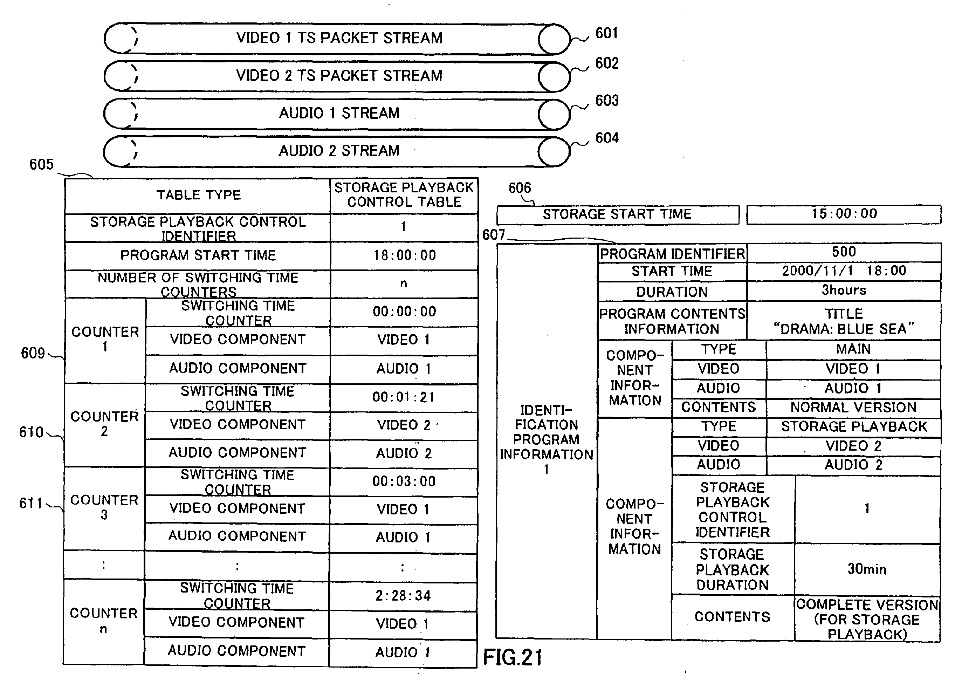

FIG. 21 illustrates a set of information managed by storage section 716 in a case where a storage playback program is stored. Storage section 716 stores all video / audio components 601 - 604 received from tuner 711 and storage playback control table 605, storage start time 606, program information 607 which are received from program guidance information control section 714, and manages them in a group.

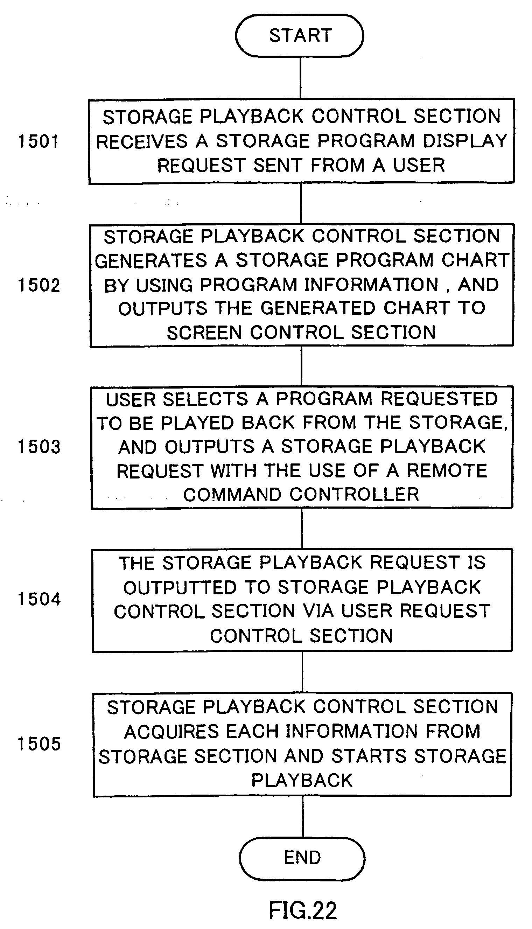

With reference to the storage playback start processing flow in FIG. 22, an explanation is given below on the playback start operation of the program stored as above from the reception of a playback start request issued from a user through the start of the requested playback.

For a stored program to be played back, storage playback control section 715 receives a storage program display request sent from a user with the use of a remote controller which is not shown in the diagram via user request control section 713 (step 1501).

Receiving the storage program display request, storage playback control section 715 generates a storage program chart by using program information 607 on all storage programs which are stored and managed by storage section 716, and outputs the generated chart to screen control section 717 (step 1502).

Upon display of the storage program chart by screen control section 717 on a screen which is not shown in the diagram, the user checks the storage program chart and selects a program to be subjected to storage playback, and issues a storage playback request with the use of the remote controller which is not shown (step 1503).

The storage playback request is outputted to storage playback control section 715 via user request control section 713 (step 1504). Receiving the storage playback request, storage playback control section 715 acquires the storage playback control table, the storage start time, the program information, and all components of the storage playback program being requested out of storage section 716, and starts storage playback (step 1505) .

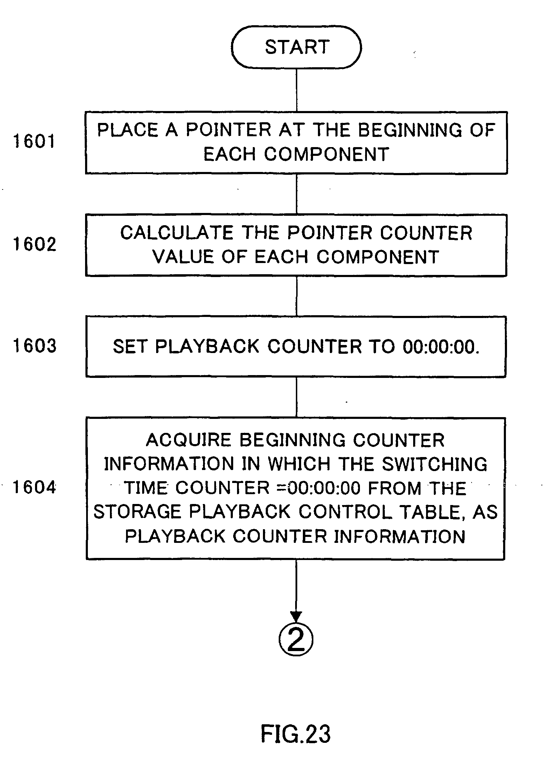

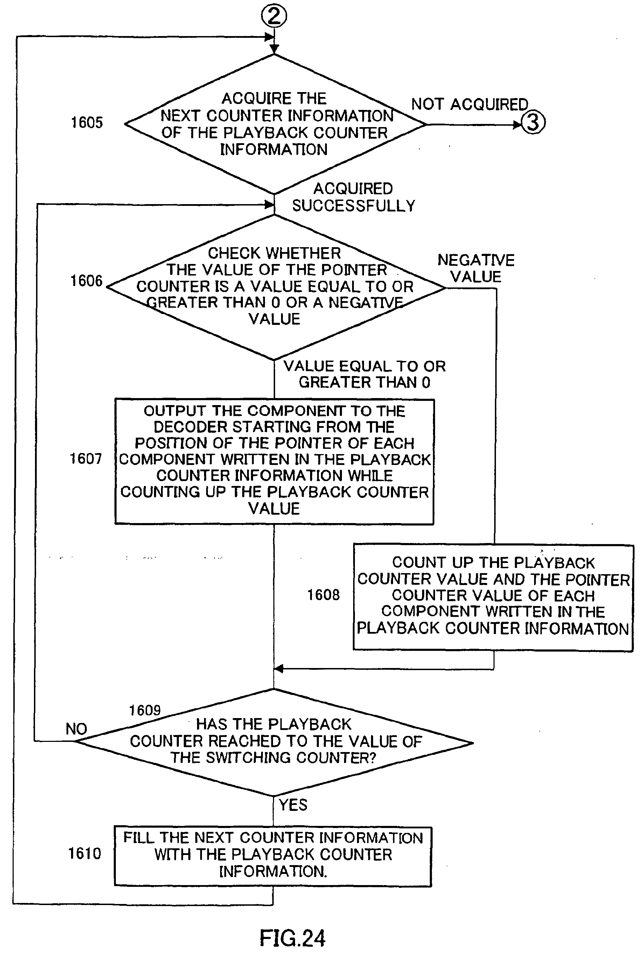

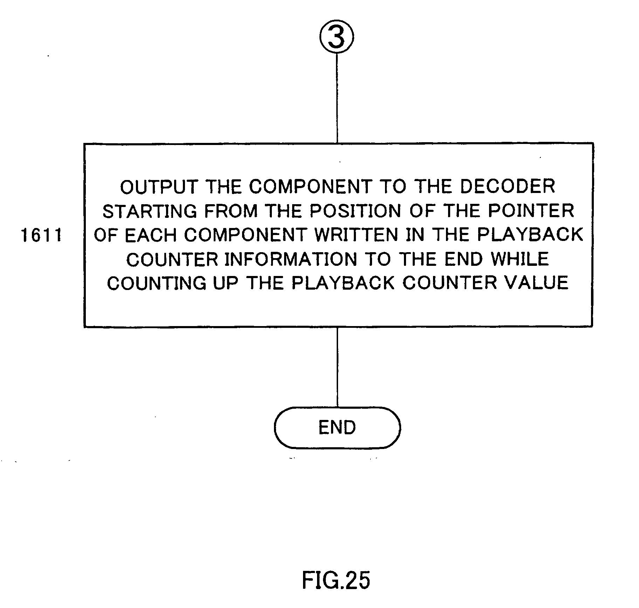

Next, with reference to the storage program playback processing flow in FIG. 23 through FIG. 25, an explanation is given below on the playback processing of a storage program done by storage playback control section 715.

Storage playback control section 715 places a pointer at the beginning of each component for all components received from storage section 716 (step 1601).

Next, the section 715 calculates the counter value of the pointer placed on each component. The calculation of the counter value is performed according to the formula of "storage start time *minus* program start time" (step 1602).

In addition, a playback counter is provided with the playback counter value of 00:00:00 (step 1603).

Storage playback control section 715 acquires beginning counter information in which the switching time counter = 00:00:00 from the storage playback control table, and the acquired beginning counter information is taken as playback counter information (step 1604).

Storage playback control section 715 then checks whether it is possible to acquire the next counter information of the playback counter information from the storage playback control table (step 1605).

In a case where the next counter information is acquired in step 1605, storage playback control section 715 acquires component corresponding to the component written in the playback counter information, and checks whether the value of the pointer counter calculated in step 1602 is a value equal to or greater than 0 or a negative value (step 1606).

In a case where the value of the pointer counter is equal to or greater than 0 in step 1606, storage playback control section 715 outputs the component to AV decoder 712 starting from the position of the pointer of each component written in the playback counter information while counting up the playback counter value, and slides the position of the pointer to the position up to which the component is outputted to AV decoder 712 (step 1607).

On the other hand, in a case where the value of the pointer counter is negative in step 1606, storage playback control section 715 just counts up the playback counter value and the pointer counter value of each component written in the playback counter information (step 1608).

At each time of counting up the playback counter in step 1607 / 1608, storage playback control table 715 checks whether the counted-up playback counter value has reached the switching counter value written in the next counter information, and if not reached yet, steps 1606 - 1608 are repeated (step 1609).

In a case where the counted-up playback counter value has reached the switching counter value written in the next counter information, storage playback control section 715 fills the next counter information with the playback counter information, and the procedure goes back to step 1605 (step 1610).

In step 1605, in a case where it is not possible to acquire the next counter information because the playback counter information is the last counter information in the storage playback control table, storage playback control section 715 outputs the component to the decoder starting from the position of the pointer of each component written in the playback counter information to the end while counting up the playback counter value, and completes the storage playback processing (step 1611).

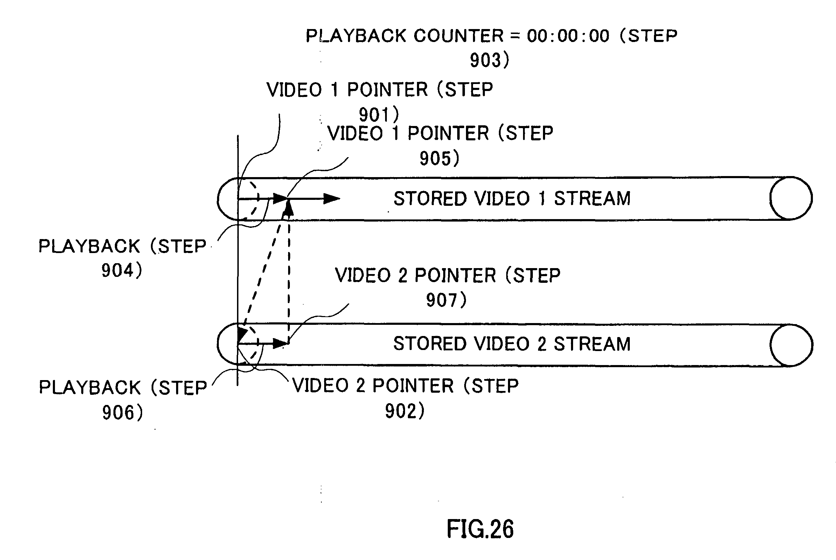

With reference to a set of information managed by storage section 716 in a case where a storage playback program is stored as illustrated in FIG. 21 and a playback example of a storage program illustrated in FIG. 26, an explanation is given below on storage playback using a storage playback processing flow as described above. It is noted that, for simplification of the explanation, an explanation is given here focusing on the playback of video streams only.

First, storage playback control section 715 places a pointer at the beginning of each video stream, and calculates the counter value of each pointer. The counter value of each video pointer is calculated according to the formula of "storage start time (606) *minus* program start time (608)." In a case where storage is started exactly at the program start time, both the video 1 pointer counter and the video 2 pointer counter are set at "00: 00:00." Because the counter of each beginning pointer is "00:00:00", it is found that each video has been stored properly from the beginning of the program (step 901, step 902). Next, to identify the stream which is started to be played back, the value of the playback counter is set. The playback counter is set to be "00:00:00." Because the playback counter is "00:00: 00", it is found by referring to counter information 609 in storage playback control table 605 that video component is video 1 at the counter value "00:00:00." In addition, it is known that each video has been stored properly from the beginning of the program by going through steps 901 and 902, it is found that playback should be started from the beginning pointer of video 1 (step 903). Accordingly, storage playback control section 715 outputs a video stream of video component = video 1 starting from the counter position of video 1 to AV decoder 712, thereby playing video 1 back. While doing so, the playback counter is counted up from "00:00:00" with the progress of time (step 904) . At the time when the playback counter reaches the value equal to the next switching time counter 610 on the storage playback control table, the output of the video 1 stream is stopped, and the video 1 pointer is placed at the position in time where the output is stopped (step 905). In addition, at the same time of stopping video 1 stream output, the section 715 outputs the video stream of video 2 which should be played back from the time of switching time counter 610 starting from the pointer position for video 2 to AV decoder 712, thereby playing video 2 back. While doing so, the playback counter is counted up from "'00:01:21" with the progress of time (step 906). In the same way as above, upon reaching of the playback counter to the value equal to the next switching time counter "00:03:00", the output of the video 2 stream is stopped, and the video 2 pointer is placed at the position in time where the output is stopped (step 907); thereafter, steps 904 - 907 are repeated until the playback of video 1 and video 2 is completed. In this way, by playing video streams back while switching between the video 1 stream and the video 2 stream, it is possible to perform the playback of the woven-together, connected video streams 1 and 2.

It is noted that, in a case where the storage of a storage playback program is started at some midpoint in the program, in step 901, step 902, the video 1 counter and the video 2 counter are not set at "00:00:00." For example, in a case where storage is started three minutes behind the program start time, both the video 1 pointer counter and the video 2 pointer counter are set at a negative count of "- 00:03:00." In such a case, at the occasion where video 1 and video 2 are played back in accordance with the storage playback control table after step 903, each of the video 1 counter and the video 2 counter is counted up at the same time of counting up the playback counter, storage playback control section 715 starts the outputting of the appropriate video component to AV decoder 712 only after reaching the point in time where each counter is "00: 00: 00." This enables a storage playback program to be played back even in a case where storage of the storage playback program has been started at some midpoint of the program.

It is noted that, at the time of storing the storage program, in addition to the storing of a storage playback control table and a plurality of video / audio components, provided that data reception apparatus 702 also stores each of video / audio connected into one video / audio component by weaving together the plurality of video / audio components respectively for video / audio by using the storage playback method described in the steps 901 - 907, it is possible to reduce a processing load at the time of storage playback.

### (Embodiment 2)

It is noted that, though it is discussed in the above-described Embodiment 1 that just a complete version as well as a normal version of one program are provided, the present invention is not limited to that; it is possible to provide a plurality of contents made available through a combination of cut portions of a material.

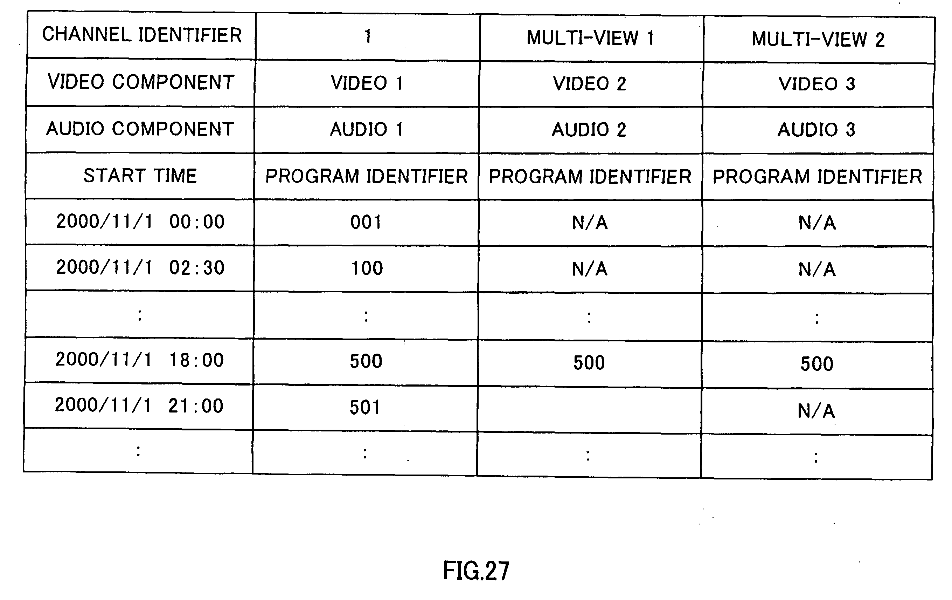

For example, as illustrated in FIG. 10, in addition to the providing of all of cut-portions-of-material 802, 805, 806, and 807 as cut material 810, it is possible to provide the cut-portions-of-material 802, 806, and 807 only, excluding the cut-portion-of-material 805, as another cut material. In such a case, for example, assuming that "multi-view 1" is assigned to the channel identifier of the cut material 810 which is made up of all of the cut-portion-of-materials 802, 805, 806, and 807, as illustrated in FIG. 27, "multi-view 2" is assigned to the channel identifier of said another cut material which is made up of the cut-portions-of-material 802, 806, and 807 only with the exclusion of the cut-portion-of-material 805, thereby making a distinction between the cut materials.

This allows a plurality of types of contents to be presented, which is made available through a combination of cut-portions-of-material.

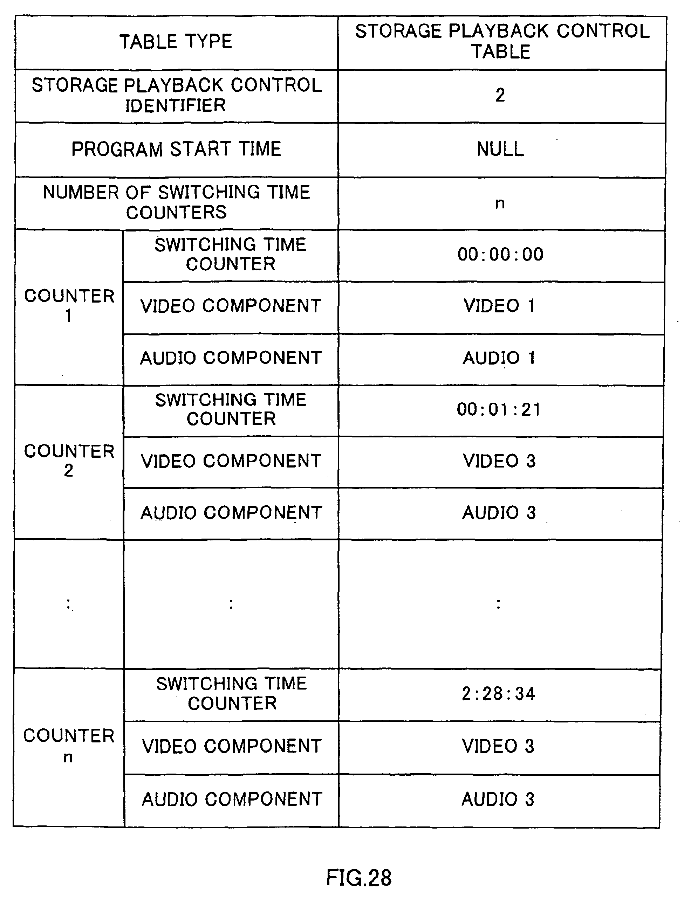

FIG. 28 illustrates an example of a storage playback control table for cut material 811 which is made up of cut-portions-of-material 802, 806, and 807 only with the exclusion of a specific cut-portion-of-material 805 (for example, a portion-of-material containing the video / audio of violence scenes, and so on) among all cut-portions-of-material 802, 805, 806, and 807.

As illustrated in FIG. 28, in a storage playback control table for making insertions of cut material 811 into actual-on-air-use material 809 for playback, a different storage playback control identifier 2 is assigned to such a playback in order to make a distinction from other storage playback control.

Components "video 3" and "audio 3" corresponding to cut material 811 are then assigned as video component and audio component to be played back in correspondence with switching time counters.

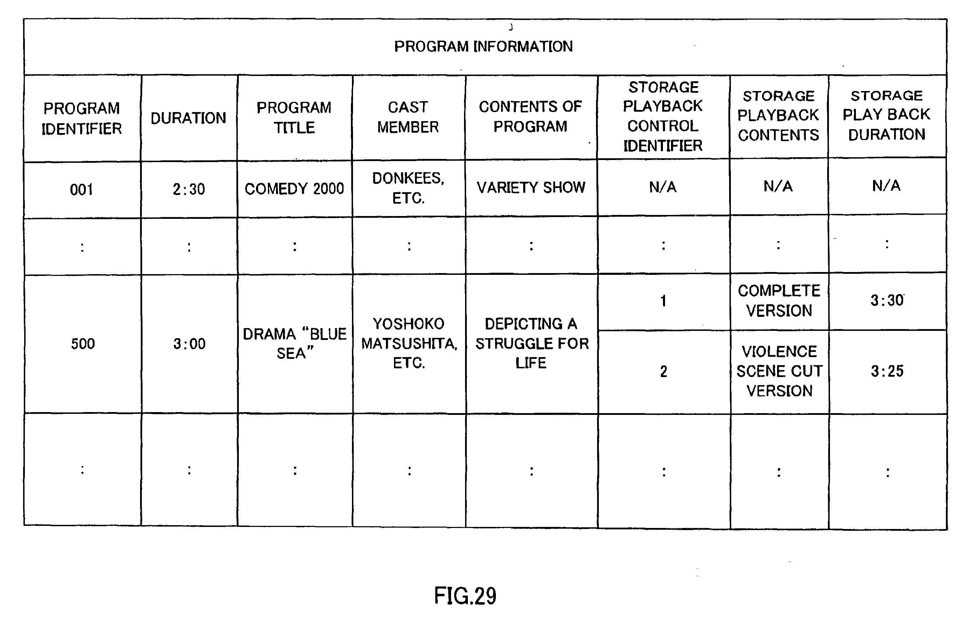

Program information scheduled by program organizing apparatus 703 is illustrated in FIG. 29. In FIG. 28, it is noted that two storage contents are provided with two storage playback control identifiers corresponding to program identifier "500."

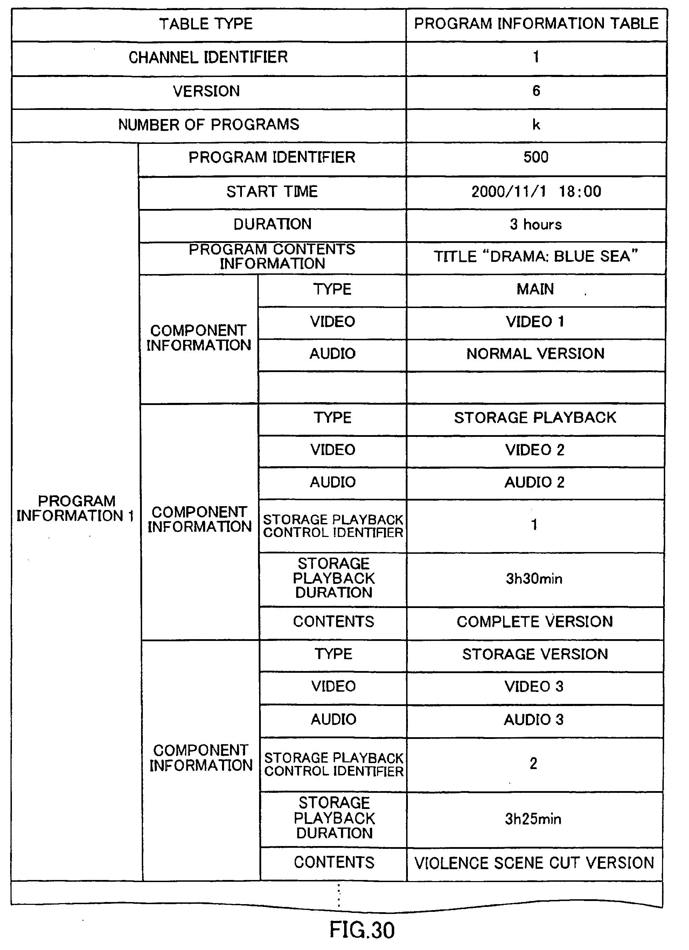

In addition, an example of a program schedule information table is illustrated in FIG. 30 among program guidance information generated by program guidance information generation transmission apparatus 708. In FIG. 30, the program information table contains two storage playback contents which are differentiated from each other with each storage playback control identifier different from the other.

Upon issuance of a request from a user using a remote controller which is not shown in the diagram for storage of a storage playback program on an electronic program chart, program guidance information control section 714 receives the storage request via user request control section 713. Receiving the storage request, program guidance information control section 714 outputs a program start time to be used as a storage start time, program information of the program extracted from a program information table, and a storage playback control table having the storage playback control identifier to storage section 716. Herein, in a case where the program has already started to be on air, the current time acquired from a time information table is used.

Next, program guidance information control section 714 issues to tuner 711 an AV storage request, which is a request for outputting all video / audio components corresponding to the program identifier of the program being requested to be stored to storage section 716 at the timing of the program start time of the program being requested to be stored. Upon the completion of the broadcasting of the program, program guidance information control section 714 outputs an AV storage finish request to tuner 711, and then, tuner 711 stops all component outputs to storage section 716, which completes the storage processing. This allows a plurality of cut materials for storage playback corresponding to the program identifier of the program being requested to be stored to be stored in storage section 716.

For a stored program to be played back, storage playback control section 715 receives a storage program display request sent from a user with the use of a remote controller which is not shown in the diagram via user request control section 713. Receiving the storage program display request, storage playback control section 715 generates a storage program chart by using program information 607 on all storage programs which are stored and managed by storage section 716, and outputs the generated chart to screen control section 717.

Upon display of the storage program chart by screen control section 717 on a screen which is not shown in the diagram, the user checks the storage program chart and selects a program to be subjected to storage playback, and issues a storage playback request with the use of the remote controller which is not shown. At that time, for example as in the case of a complete version and a violence scene cut version, in a case where a plurality of storage playback contents are provided, each available version is displayed on the storage program chart to allow a selection between them. Therefore, according to the storage program chart, the user is able to designate the storage playback contents which s/he demands.

The storage playback request is outputted to storage playback control section 715 via user request control section 713. Receiving the storage playback request, storage playback control section 715 acquires the storage playback control table, the storage start time, the program information, and all components of the storage playback program being requested out of storage section 716, and starts storage playback.

It is noted that, though it is discussed in the above-described embodiment that the plurality of cut materials 810 and 811 are stored in storage section 716, and that the cut material corresponding to the requested storage playback contents is played back in accordance with the storage playback control table, the present invention is not limited to that; cut material 810 which contains all of the cut-portions-of-material may be stored in storage section 716, where necessary portions only are played back out of the stored cut material 810. In such a case, time information has been pre-affixed to cut material 810, and storage playback control section 715 plays the material back while making selection of the necessary materials by referring to the time information in the storage playback control table and cut material 810. This makes it possible for a plurality of contents which are made available through a combination of a plurality of portions-of-material contained in cut material 810 to be played back from a single cut material 810 just only by setting a plurality of storage contents in a storage playback control table.

### (Embodiment 3)

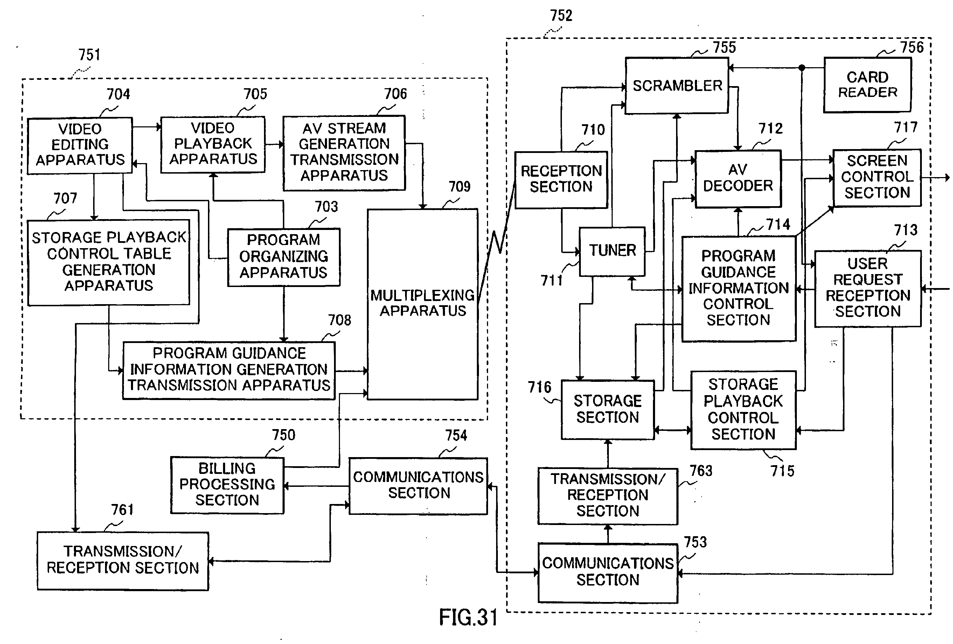

FIG. 31 is a block diagram illustrating a broadcasting system according to Embodiment 3 of the present invention. A broadcasting system illustrated in FIG. 31 is further provided with billing processing section 750 over the configuration of the broadcasting system described above with reference to FIG. 8, where such a system performs billing processing for the execution of playback of a cut material among programs presented by data transmission apparatus 751 to data reception apparatus 752.

More specifically, at data reception apparatus 752, card reader 756 reads, for each user, a user-specific ID (Identification) number of ID card 757 possessed by each user for individual authentication, and provides the read number to user request reception section 713. Upon reception of a user request for purchasing of a program (cut material) with the use of a remote command controller not shown in the diagram, user request reception section 713 transmits the ID number of the user which has been provided from card reader 756 in addition to the purchase requesting signal from communications section 753 to billing processing section 750 via a network such as a telephone line and so forth.

Upon reception of the ID number and the purchasing request via communications section 754, billing processing section 750 executes a billing processing for the user corresponding to the ID number, and thereafter, the section 750 transmits the ID number and key information corresponded to the number, where such key information is used for descrambling the cut material which was requested to be purchased, via multiplexing apparatus 709 in data transmission apparatus 751.

Receiving the key information, data reception apparatus 752 feeds the key information to descrambler 755. By comparing the ID number corresponded to the key information with the ID number provided from card reader 756, descrambler 755 judges whether the current user of data reception apparatus 752 is an identical person with the user billed for the processing or not.

In a case where the ID number corresponded to the key information matches with the ID number provided from card reader 756, descrambler 755 executes descrambling processing either on reception data of a channel provided via a tuner, where the data contains the cut material, or on the cut material stored in storage section 716. Incidentally, data transmission apparatus 751 is configured to provide a scrambling processing on transmission data at AV stream generation transmission section 758.

In this way, the cut material which is read out of storage section 716 through the control of storage playback control section 715 is subjected to descrambling processing, and thereafter subjected to decoding at AV decoder 712 and then provided to a television display apparatus not shown in the diagram via screen control section 717. Herein, the operation of storage playback control section 715 is the same as that done in data reception apparatus 702 described above with reference to FIG. 8 .

As described above, according to the broadcasting system illustrated in FIG. 31, when the cut material stored in storage section 716 is played back to present the program contents of, for example, a complete version to a user, billing processing section 750 performs billing processing, thereby presenting the complete version to the user in compensation for a set amount. This allows the cut material to be given some sort of a premium value.

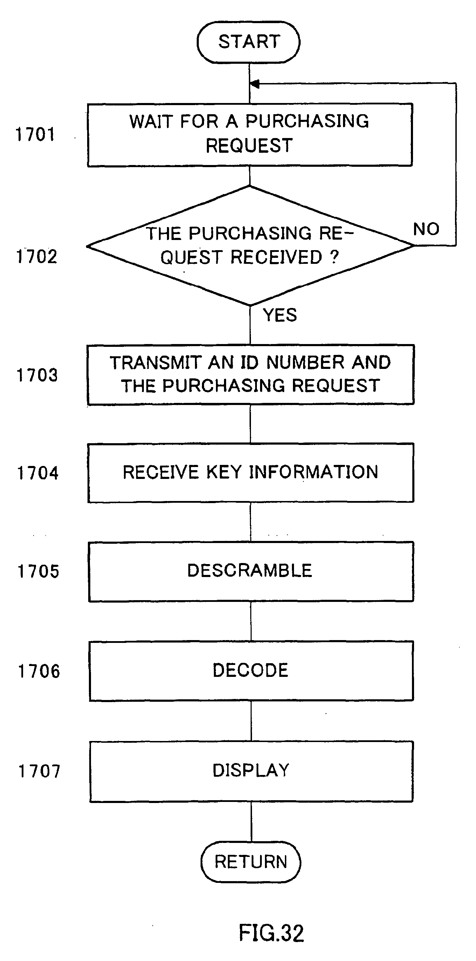

FIG. 32 is a flowchart illustrating the purchase processing procedures of a program (cut material) in data reception apparatus 752. In FIG. 32, data reception apparatus 752 waits for a purchasing request from a remote command controller (user) (step ST 1701), and upon reception of a purchasing request and acquisition of a positive result in step ST 1702, an ID number provided from card reader 756 and a purchasing request are transmitted to billingprocessing section 750 (step ST 1703).

Thereafter, billing processing is executed at billing processing section 750, and key information for descrambling the data of a cut material being requested to be purchased is received through reception section 710 (step ST 1704), and upon the reception of the key information, data reception apparatus 752 descrambles either reception data or storage data by using the received key information at descrambler 755 (step ST 1705).

The descrambled reception data or storage data is subjected to decoding processing at AV decoder 712 (step ST 1706), and then displayed on a television display apparatus through screen control section 717 (step ST 1707).

It is noted that, though cut materials are supposed to be multiplexed onto a broadcasting wave through multiplexing apparatus 709 in the broadcasting system illustrated in FIG. 31, the system may be configured to transmit the cut materials to data reception apparatus 752 via a network such as a telephone line and so on.

That is, in FIG. 31, a cut material which is a result of editing done in video editing apparatus 704 of data transmission apparatus 751 is transmitted by transmission / reception section 761 therein, where its purchasing request is received from data reception apparatus 752, by way of communications section 754 and then through a network such as a telephone line and so on to data reception apparatus 752. Receiving the cut material, data reception apparatus 752 inputs the received cut material into storage section 716 therein through communications transmission / reception section 763 to store the material.

In this way, by transmitting a cut material from data transmission apparatus 751 to data reception apparatus 752 through a network such as a telephone line, etc., it is possible to avoid the additional use of a channel rematerial caused by the broadcasting of a multiplexed cut material, thereby making it further possible to increase channel use efficiency.

It is noted that each apparatus and each component in each of Embodiments described above may alternatively be implemented as a program running on a storage medium for execution of each processing, where the same processing as described in each Embodiment above is able to be implemented by having an information processor execute the program.

Furthermore, though it is discussed in each of the above-described Embodiments that a program is distributed fromdata transmission apparatus 701, 751 to data reception apparatus 702, 752 in the medium of broadcasting, the present invention is not limited to that; instead, a program may alternatively be presented through a communications medium by way of a communications network.

This specification is based on the Japanese Patent Application No. 2001-116561 filed on April 16, 2001, entire content of which is expressly incorporated by reference herein.

As is made clear from the foregoing descriptions, according to the present invention, it is possible for a program producer to produce a program without the binding of on-air time restriction, while airing a program in accordance with its on air time scheduled by a program organizing apparatus, by concurrently airing another video / audio which exceeds the on air time. Furthermore, viewers are able to enjoy two types of versions for one program, that is, an ordinary version fitting with its on air time frame and a longer version with extra video / audio exceeding its on air time frame.

### INDUSTRIAL APPLICABILITY

The present invention is suitably applicable to an apparatus related to a multi-view storage broadcasting service.

## Claims

1. A data transmission apparatus that generates an actual-on-air-use material data by cutting portions of material data as a cut material data and transmits the generated actual-on-air-use material data, wherein said data transmission apparatus comprising:
a storage playback control table generation section that generates a storage playback control table indicating a place on the actual-on-air-use material from which the cut material data is cut out; and
a transmission section that transmits the generated storage playback control table.

2. The data transmission apparatus according to claim 1, wherein the storage playback control table has a switching time counter data which indicates playback switching time of the actual-on-air-use material data and the cut material data.

3. The data transmission apparatus according to claim 2, wherein the storage playback control table has the switching time counter and component information corresponding to the switching time counter.

4. Thedatatransmissionapparatusaccordingto claim 1, wherein the storage playback control table has number of switching time counter data which indicates number of playback switching of the actual-on-air-use material data and the cut material data.

5. The data transmission apparatus according to claim 1, wherein the storage playback control table has a storage playback control identifier which links the storage playback control table itself with program guidance information which is attached information related to a program.

6. A data transmission apparatus comprising:
a program organizing apparatus that performs program organizing and assigns a storage playback control identifier to a storage program to generate and output a program schedule and program information;
the video editing apparatus according to claim 2 that edits a plurality of video materials filmed for production of a program, and produces and outputs a program material and a cut material as well as a cut start time counter and a cut finish time counter by editing the video materials;
the storage playback control table generation apparatus according to the claim 3 that generates a storage playback control table out of data received from said video editing apparatus and said program organizing apparatus;
the program guidance information generation transmission apparatus according to claim 4 that receives the program schedule and the program information from said program organizing apparatus to generate a table making up a variety of program guidance information, and outputs the program guidance information in addition to the storage playback control table received from said storage playback control table generation apparatus;
a video playback apparatus that receives the program material and the cut material produced by said video editing apparatus, and plays the program material video and the cut material video back in accordance with the program schedule received from said program organizing apparatus;
an AV stream generation transmission apparatus that receives video / audio which is reproduced by said video playback apparatus to convert the received video / audio into digital AV (Audio Visual) streams, and outputs the converted streams; and
a multiplexing apparatus that receives the digital AV streams and the program guidance information from said AV stream generation transmission section and said program guidance information generation transmission apparatus, respectively, to perform multiplexing and transmission.

7. A data reception apparatus for receiving data transmitted from a given transmission apparatus, comprising:
a material data storage section that stores actual-on-air-use material data for playback of a received program and cut material data to be inserted in cut places on the actual-on-air-use material data; and
a storage playback control section that receives a storage playback control table which indicates the place of insertions of the cut material data into the actual-on-air-use material data, and connects the actual-on-air-use material data with the cut material data stored in said material data storage section by referring to the storage playback control table, thereby playing the program back.

8. A data reception apparatus of a multi-view storage broadcasting service system for receiving data transmitted from a given transmission apparatus, comprising:
a material data storage section that stores actual-on-air-use material data for playback of a received program and cut material data to be inserted in cut places on the actual-on-air-use material data; and
a storage playback control section that receives a storage playback control table which indicates the place of insertions of the cut material data into the actual-on-air-use material data, and switches between the actual-on-air-use material data and the cut material data stored in said material data storage section by referring to the storage playback control table, thereby playing the program back.

9. The data reception apparatus according to claim 7 or claim 8 which receives program guidance information related to a program to be aired, and when storing a storage program regarding which there is an entry of component information for storage playback in individual program information of program schedule information contained in the program guidance information, records program start time and storage start time of the storage program written in the program schedule information, and in addition, stores video component and audio component corresponding to all component information written in the individual program information and also stores a storage playback control table having a storage playback control identifier corresponding to the storage playback control identifier written in the component information for the storage playback.

10. The data reception apparatus according to claim 9 which performs, according to order of counter information entered in the storage playback table, the playback of video and audio components by switching video component corresponding to video component information written in the counter informationaswellasaudiocomponentcorresponding to audio component information written in the counter information at each timing of switching time counter written in the counter information when playing the storage program back.

11. The data reception apparatus according to claim 10 which calculates a time period for which video component and audio component of the storage program are not stored based on the program start time and the storage start time, and does not play back each component of the storage program during the time period for which no component is stored when playing each component of the storage program back in accordance with the counter information of the storage playback table.

12. The data reception apparatus according to claim 7 or claim 8, further comprising:
a screen control section that uses information of the storage playback control table and program guidance information, which is attached information related to a program, to display storage playback programs allowing selection thereof by a user.

13. The data reception apparatus according to claim 7 or claim 8, further comprising:
a playback approval section that approves playback of the cut material data in compensation for a set amount of billing.

14. The data reception apparatus according to claim 7 or claim 8, further comprising:
a descrambler for descrambling cut material data, which has been subjected to a certain scrambling processing and is stored in said material data storage section; and
an approval section that approves said descrambler to execute descrambling processing in compensation for a set amount of billing;
wherein said apparatus performs the playback of the stored cut material data in compensation for the billing.

15. A multi-view storage broadcasting service system for transmitting and receiving data by utilizing a transmission path, wherein a data transmission apparatus thereof for transmitting data, comprising:
a storage playback control table generation section that generates a storage playback control table indicating cut places in actual-on-air-use material data from which cut material data, which are cut portions of a program data, are cut out; and
wherein a data reception apparatus thereof for receiving the data from said data transmission apparatus, comprising;
a material data storage section that stores the actual-on-air-use material data and the cut material data; and
a storage playback control section that uses the storage playback control table to connect the actual-on-air-use material data with the cut material data stored in said material data storage section to play the program back.

16. A multi-view storage broadcasting service system for transmitting and receiving data by utilizing a transmission path, wherein a data transmission apparatus thereof for transmitting data, comprising:
a storage playback control table generation section that generates a storage playback control table indicating cut places in actual-on-air-use material data from which cut material data, which are cut portions of a program data, are cut out; and
wherein a data reception apparatus thereof for receiving the data from said data transmission apparatus, comprising;
a material data storage section that stores the actual-on-air-use material data and the cut material data; and
a storage playback control section that uses the storage playback control table to switch between the actual-on-air-use material data and the cut material data stored in said material data storage section to play the program back.

17. The multi-view storage broadcasting service system according to claim 15 or claim 16, which is for transmitting and receiving data by utilizing a transmission path, wherein the storage playback control table of the data transmission apparatus thereof has a switching time counter data which indicates playback switching time of the actual-on-air-use material data and the cut material data.

18. The multi-view storage broadcasting service system according to claim 15, which is for transmitting and receiving data by utilizing a transmission path, wherein the storage playback control table of the data transmission apparatus thereof has a switching time counter and a component corresponding to the switching time counter.

19. The multi-view storage broadcasting service system according to claim 15 or claim 16, which is for transmitting and receiving data by utilizing a transmission path, wherein the storage playback control table of the data transmission apparatus thereof has number of switching time counter data which indicates number of playback switching of the actual-on-air-use material data and the cut material data.

20. The multi-view storage broadcasting service system according to claim 15 or claim 16, wherein the data reception apparatus, further comprising:
a playback approval section that approves playback of the cut material data in compensation for a set amount of billing.

21. The multi-view storage broadcasting service system according to claim 15 or claim 16, wherein the data reception apparatus, further comprising:
a descrambler for descrambling cut material data, which has been subjected to a certain scrambling processing and is stored in said material data storage section; and
an approval section that approves said descrambler to execute descrambling processing in compensation for a set amount of billing;
wherein said apparatus per forms the playback of the stored cut material data in compensation for the billing.

22. A video editing apparatus that records, when editing a program by cutting out portions of a program material in order to make the program fit with set on-air duration of the program received from a program organizing apparatus which performs program organizing, a time counter for a cut start place counted from a beginning of the program material and a time counter for a cut finish place counted from the beginning of the program material, and that connects a plurality of cut portions of the material with each other to produce a cut material, and in addition, produce the program material which fits within the program on-air duration.

23. The video editing apparatus according to claim 22 which receives at least a storage playback control identifier which identifies that a program is a storage playback program, and video component information and audio component information corresponding to the actual-on-air-use material and the cut material from the program organizing apparatus which performs program organizing, and outputs the identifier and the component information to a storage playback control table generation apparatus in addition to the time counter information for the cut start place and the time counter information after making the cut.

24. A storage playback control table generation apparatus which receives a storage playback control identifier, video component information and audio component information corresponding to the actual-on-air-use material and the cut material, and a time counter information for a cut start place and a time counter information after making a cut, and generates a switching counter in which the time counter of the cut start place and the video component information and the audio component information of the cut material are respectively set as its switching time counter and its video component information and its audio component information, and also generates another switching counter in which the time counter of the cut finish place and the video component information and the audio component information of the actual-on-air-use material are respectively set as its switching time counter and its video component information and its audio component information as a setting value of each of the switching counters made up of switching time counters which indicate playback switching time of the actual-on-air-use material and the cut material and of video component information and audio component information to which switching of the playback should be made at the switching time, and arranges all of the switching counters in order of the switching time counter, and then adds the program playback control identifier to generate a storage playback control table.

25. A multi-view storage broadcasting service method for transmitting and receiving data by utilizing a transmission path, wherein a data transmission apparatus thereof for transmitting data, comprising:
a storage playback control table generation section that generates a storage playback control table indicating cut places in actual-on-air-use material data from which cut material data, which are cut portions of a program data, are cut out.

26. A storage medium which records a multi-view storage broadcasting service program for transmitting and receiving data by utilizing a transmission path, wherein a data transmission apparatus thereof for transmitting data, comprising:
a storage playback control table generation section that generates a storage playback, control table indicating cut places in actual-on-air-use material data from which cut material data, which are cut portions of a program data, are cut out.

27. A multi-view storage broadcasting service program for transmitting and receiving data by utilizing a transmission path, wherein a data transmission apparatus thereof for transmitting data, comprising:
a storage playback control table generation section that generates a storage playback control table indicating cut places in actual-on-air-use material data from which cut material data, which are cut portions of a program data, are cut out.

28. A program guidance information generation apparatus that receives a program schedule made up of at least a channel identifier, video component information and audio component information corresponding to video / audio of an actual-on-air-use material and video / audio of a cut material, a program identifier of each program, and program start times, and also receives program information made up of the program identifier of each program, program duration, a program title, a storage playback control identifier, storage playback contents, and storage playback duration from a program organizing apparatus, and if there is an entry of an effective value in the storage playback control identifier of a program among the program information, when generating a program schedule information table which has a channel identifier, a version number to be changed when there is a change in contents of program guidance information to let a data reception apparatus recognize the change in the contents of the program guidance information, and individual program information written in order of program start time related to programs which are to be aired on the channel, where the individual program information is made up of a program identifier, a program start time, a program duration, program contents information, and component information for a program material which is identification information related to video / audio of actual-on-air-use material, that generates a program schedule information table by adding type information of a storage playback program, video / audio component information of cut material video / audio, and storage playback component information containing storage playback contents and storage playback duration in the program information onto individual program information, and in addition that also generates program guidance information by receiving the storage playback control table from a storage playback control table generation apparatus, by making an entry of a start time of a program having the identical value of the storage playback control identifier into the storage playback control table as the program start time in the storage playback control table, and by adding the generated program schedule information table and the received storage playback control table.
